# EUROPEAN PATENT APPLICATION

(11) **EP 4 336 937 A1**
(43) Date of publication of application: **13.03.2024**
(21) Application number: 22819434.6
(22) Date of filing: 01.06.2022
(51) Int. Cl.: H04W 72/04, H04W 84/12

(54) **PPDU TRANSMISSION METHOD AND RELATED APPARATUS**

(30) Priority: 07.06.2021 CN 202110634422
(71) Applicant: Huawei Technologies Co., Ltd., Longgang Shenzhen, Guangdong 518129 (CN)
(72) Inventor: LU, Yuxin, Shenzhen, Guangdong 518129 (CN); GAN, Ming, Shenzhen, Guangdong 518129 (CN); YU, Jian, Shenzhen, Guangdong 518129 (CN); LI, Yunbo, Shenzhen, Guangdong 518129 (CN); LIU, Chenchen, Shenzhen, Guangdong 518129 (CN); GONG, Bo, Shenzhen, Guangdong 518129 (CN)
(74) Representative: MERH-IP Matias Erny Reichl Hoffmann Patentanwälte PartG mbB
(86) International application number: PCT/CN2022/096662
(87) International publication number: WO 2022/257836

(57) **Abstract**

This application relates to the field of wireless communication, and in particular, to a PPDU transmission method and a related apparatus, and is specifically applied to a wireless local area network supporting the 802.11 series standards. The method includes: A station receives a trigger frame from an access point. The trigger frame is used to trigger the station to perform EHT TB PPDU transmission, the trigger frame further indicates a resource unit allocated to the station, and the trigger frame includes indication information indicating that the station can perform EHT TB PPDU transmission on a portion of the allocated resource unit. The station sends an EHT TB PPDU based on an indication of the first indication information. According to embodiments of this application, when a portion of an MRU/RU allocated to the station is idle and another portion is busy, the station can be supported in transmitting the EHT TB PPDU on the idle portion of the RU, to improve spectrum resource utilization.

## Description

This application claims priority to Chinese Patent Application No. 202110634422.4, filed with the China National Intellectual Property Administration on June 7, 2021 and entitled "PPDU TRANSMISSION METHOD AND RELATED APPARATUS", which is incorporated herein by reference in its entirety.

### TECHNICAL FIELD

This application relates to the field of wireless communication technologies, and in particular, to a physical layer protocol data unit (physical layer protocol data unit, PPDU) transmission method and a related apparatus.

### BACKGROUND

A wireless local area network (wireless local area network, WLAN) has been developed for many generations, including 802.11a/b/g, 802.11n, 802.11ac, 802.11ax, 802.11be under discussion, and the like. The 802.11ax standard is referred to as a high efficiency (high efficiency, HE) standard, and the 802.11be standard is referred to as an extremely high throughput (extremely high throughput, EHT) standard or a Wi-Fi 7 standard.

In the 802.11ax, a trigger frame-based uplink scheduling transmission method is introduced. One or more stations (station, STA) are scheduled based on a trigger frame (trigger frame) sent by an access point (access point, AP), to transmit uplink data. In addition, resource units (resource unit, RU) are separately allocated to the one or more stations based on the trigger frame, and the trigger frame carries an indication that the one or more stations need to perform carrier sensing. Therefore, when performing high efficiency trigger-based physical layer protocol data unit (high efficiency trigger-based physical layer protocol data unit, HE TB PPDU) transmission, a STA performs carrier sensing on one or more 20 MHz sub-channels on which an RU allocated to the station is located, and detects whether sensed energy exceeds a preset threshold. If it is detected that the sensed energy exceeds the preset threshold, it is determined that a 20 MHz sub-channel is busy. If it is detected that the sensed energy does not exceed the preset threshold, it is determined that a 20 MHz sub-channel is idle. In the 802.11ax, it is specified that if one 20 MHz sub-channel within a frequency range corresponding to an RU allocated to a STA is busy, HE TB PPDU transmission cannot be performed, to prevent interference to other transmission. In the 802.11ax standard, only one RU is allowed to be allocated to one station (station, STA). In the 802.11be standard, a plurality of RUs are allowed to be allocated to one STA. Allocating a plurality of RUs to one station may also be understood as combining and allocating a plurality of RUs to one station.

A case in which a plurality of RUs may be allocated to one STA is further considered in a future WLAN system. Therefore, for the case in which a plurality of RUs may be allocated to one STA, how to transmit an EHT TB PPDU based on carrier sensing results of the plurality of RUs allocated to the station becomes an urgent problem to be resolved.

### SUMMARY

Embodiments of this application provide a PPDU transmission method and a related apparatus. Specifically, an extremely high throughput trigger-based physical layer protocol data unit (extremely high throughput trigger-based physical layer protocol data unit, EHT TB PPDU) transmission method and a related apparatus are provided. When a portion of an RU/multi-RU (multiple RU, MRU) allocated to a station is idle and another portion is busy, the station can be supported in transmitting an EHT TB PPDU on the idle portion of the RU, to improve spectrum resource utilization.

The following describes this application from different aspects. It should be understood that mutual reference may be made to the following implementations and beneficial effect of the different aspects.

According to a first aspect, this application provides a PPDU transmission method, and specifically relates to an EHT TB PPDU transmission method. The method includes: An access point sends a trigger frame. The trigger frame is used to trigger a station to perform EHT TB PPDU transmission, the trigger frame further indicates a first resource unit allocated to the station, the trigger frame includes first indication information, and the first indication information indicates whether the station is allowed to perform EHT TB PPDU transmission on a portion of the first resource unit allocated to the station. The access point receives a TB PPDU from the station. Optionally, an EHT TB PPDU is received. The first resource unit is a resource unit including more than 996 tones, or the first resource unit is a multi-resource unit (multiple RU, MRU), and the MRU includes at least one resource unit including 996 or more tones. Alternatively, the first resource unit includes at least one resource unit whose bandwidth is greater than or equal to 80 MHz.

It should be understood that in this application, the first indication information is set to indicate that the station is allowed to perform EHT TB PPDU transmission on the portion of the first resource unit allocated to the station.

It can be learned that in this solution, the trigger frame indicates that the station is allowed to perform EHT TB PPDU transmission on the portion of the RU allocated to the station, to support the station in transmitting the EHT TB PPDU on an idle portion of an RU when a portion of the RU/MRU allocated to the station is idle and another portion is busy, to improve spectrum resource utilization.

According to a second aspect, this application provides a PPDU transmission method, and specifically relates to an EHT TB PPDU transmission method. The method includes: A station receives a trigger frame from an access point. The trigger frame is used to trigger the station to perform EHT TB PPDU transmission, the trigger frame further indicates a first resource unit allocated to the station, the trigger frame includes first indication information, and the first indication information indicates whether the station is allowed to perform EHT TB PPDU transmission on a portion of the first resource unit allocated to the station. The station sends a TB PPDU based on an indication of the first indication information. Specifically, an EHT TB PPDU is sent. A resource unit actually occupied by the EHT TB PPDU may be the first resource unit allocated by the access point to the station based on the trigger frame, or may be the portion of the first resource unit. The first resource unit is a resource unit including more than 996 tones, or the first resource unit is an MRU, and the MRU includes at least one resource unit including 996 or more tones. Alternatively, the first resource unit includes at least one resource unit whose bandwidth is greater than or equal to 80 MHz.

According to a third aspect, this application provides a communication apparatus. The communication apparatus may be an access point or a chip in an access point, for example, a Wi-Fi chip. The communication apparatus includes a second unit, configured to send a trigger frame. The trigger frame is used to trigger a station to perform EHT TB PPDU transmission, the trigger frame further indicates a first resource unit allocated to the station, the trigger frame includes first indication information, the first indication information indicates whether the station is allowed to perform EHT TB PPDU transmission on a portion of the first resource unit allocated to the station, the first resource unit is a resource unit including more than 996 tones, or the first resource unit is an MRU, and the MRU includes at least one resource unit including 996 or more tones. The second unit is further configured to receive an EHT TB PPDU. The second unit may be implemented by using a communication interface or a transceiver.

Optionally, the communication apparatus further includes a processing unit, configured to generate the trigger frame.

According to a fourth aspect, this application provides a communication apparatus. The communication apparatus may be a station or a chip in a station, for example, a Wi-Fi chip. The communication apparatus includes a first unit, configured to receive a trigger frame. The trigger frame is used to trigger the station to perform extremely high throughput trigger-based physical layer protocol data unit EHT TB PPDU transmission, the trigger frame further indicates a first resource unit allocated to the station, the trigger frame includes first indication information, the first indication information indicates whether the station is allowed to perform EHT TB PPDU transmission on a portion of the first resource unit allocated to the station, the first resource unit is a resource unit including more than 996 tones, or the first resource unit is an MRU, and the MRU includes at least one resource unit including 996 or more tones. The first unit is further configured to send an EHT TB PPDU based on an indication of the first indication information. The first unit may be implemented by using a communication interface or a transceiver.

Optionally, the communication apparatus further includes a processing unit, configured to generate the EHT TB PPDU.

In a possible implementation of any one of the foregoing aspects, the first resource unit may be an MRU/RU currently supported by the 802.11be standard. For example, the first resource unit is any one of a 996+484-tone MRU, a 996+484+242-tone MRU, a 2*996+484-tone MRU, a 3*996-tone MRU, a 3*996+484-tone MRU, a 2*996-tone RU, or a 4*996-tone RU.

In a possible implementation of any one of the foregoing aspects, that the first resource unit is a resource unit including more than 996 tones specifically includes: the first resource unit is a resource unit including N multiplied by 996 (namely, N*996) tones, where N is a positive integer greater than or equal to 2. For example, the first resource unit is a 2*996-tone RU or a 4*996-tone RU.

In a possible implementation of any one of the foregoing aspects, the EHT TB PPDU includes second indication information, and one bit in the second indication information indicates whether the station transmits the EHT TB PPDU on one 996-tone resource unit (namely, a 996-tone RU) in the allocated first resource unit. The second indication information may be located in a universal signal (Universal Signal, U-SIG) field in the EHT TB PPDU.

Optionally, the second indication information is represented by a bitmap, and a length of the bitmap is a fixed length, for example, 4 bits. One bit in the bitmap indicates whether the station transmits the EHT TB PPDU on one 996-tone resource unit. Alternatively, one bit in the bitmap indicates whether the station transmits the EHT TB PPDU on one 80 MHz bandwidth. If the first resource unit includes at least one resource unit whose size is less than the 996-tone RU, the station cannot independently use the at least one resource unit whose size is less than the 996-tone RU for transmission, and the at least one resource unit whose size is less than the 996-tone RU needs to perform transmission together with all other 996-tone resource units in the first resource unit.

It can be learned that in this solution, the bitmap with the fixed length is used in the U-SIG to indicate whether the EHT TB PPDU is transmitted on each 996-tone RU or each 80 MHz bandwidth. This supports the station in sending the EHT TB PPDU on a portion of or all the allocated RU/MRU, and helps the access point parse data of the EHT TB PPDU on an RU that actually transmits the EHT TB PPDU, to reduce receiving complexity of a receive end (which is the access point) and improve parsing efficiency of the receive end (which is the access point).

Optionally, the second indication information is represented by a bitmap, and the bitmap includes two parts: a first bit and a second bit. One bit in the first bit indicates whether the station transmits the EHT TB PPDU on one 996-tone RU (or one 80 MHz bandwidth). One bit in the second bit indicates whether the station transmits the EHT TB PPDU on one 242-tone RU (or one 20 MHz bandwidth in the 80 MHz bandwidth) in the 996-tone RU. It should be understood that if the first resource unit includes at least one resource unit whose size is less than the 996-tone RU, the station is allowed to independently use the at least one resource unit whose size is less than the 996-tone RU for transmission. A length of the first bit may be a fixed length, for example, 4 bits. A length of the second bit may be related to the length of the first bit or indication content. For example, the length of the second bit is equal to a length obtained by subtracting the length of the first bit from an unused/spare bit in the U-SIG, or the length of the second bit is obtained by multiplying four by a quantity, indicated by the first bit, of 996-tone RUs (or 80 MHz bandwidths) on which transmission is performed.

It can be learned that in this solution, the bitmap with a variable length is used in the U-SIG to subdivide whether to perform transmission on each 20 MHz bandwidth in each 80 MHz bandwidth, to more effectively use spectrum resources.

Optionally, if all 20 MHz sub-channels on which the first resource unit allocated to the station is located are idle, the second indication information is set to a default value of a universal signal disregard and validate subfield (U-SIG Disregard and Validate subfield) in a special user information field in the trigger frame, to indicate the station to transmit the EHT TB PPDU on the allocated first resource unit. In other words, even if all 20 MHz sub-channels on which the resource unit whose size is less than the 996-tone RU in the first resource unit is located are idle, the resource unit whose size is less than the 996-tone RU cannot perform transmission separately, but performs transmission together with all resource units, in the first resource unit, whose sizes are greater than or equal to the 996-tone RU.

It can be learned that in this solution, a resource unit whose size is less than the 996-tone RU and a resource unit whose size is greater than or equal to the 996-tone RU are restricted to perform transmission together, so that a same station transmits consistent U-SIGs in different 80 MHz bandwidths. This helps receiving at the receive end, and reduce complexity of preamble preparation by the station.

In a possible implementation of any one of the foregoing aspects, the EHT TB PPDU includes second indication information, and the second indication information indicates a second resource unit occupied by the EHT TB PPDU. The second resource unit occupied by the EHT TB PPDU is the portion of the first resource unit allocated to the station. The second indication information is located in the U-SIG field in the EHT TB PPDU. The station transmits same U-SIGs in different 80 MHz bandwidths in which the second resource unit is located.

Optionally, the second resource unit includes at least one resource unit whose size is greater than or equal to a 996-tone RU. Alternatively, the second resource unit includes one or more resource units whose bandwidths are greater than or equal to 80 MHz.

Optionally, the second resource unit further includes at least one resource unit whose size is less than the 996-tone RU. Alternatively, the second resource unit further includes one or more resource units whose bandwidths are less than 80 MHz. The resource unit (or the resource unit whose bandwidth is less than 80 MHz) whose size is less than the 996-tone RU includes one or more of the following: a resource unit whose quantity of carriers is 484, namely, a 484-tone RU; a resource unit whose quantity of carriers is 242, namely, a 242-tone RU; and a resource unit whose quantity of carriers is less than 242. The resource unit whose quantity of carriers is less than 242 includes but is not limited to the following types: a resource unit whose quantity of carriers is 106, namely, a 106-tone RU; a resource unit whose quantity of carriers is 52, namely, a 52-tone RU; and a resource unit whose quantity of carriers is 26, namely, a 26-tone RU.

Optionally, the second indication information is an index value, and the index value identifies the second resource unit.

It can be learned that in this solution, the U-SIG directly indicates the second resource unit used by the station for actual transmission, to support the STA in sending the EHT TB PPDU by using a portion of or all the allocated RU/MRU. This improves reliability of obtaining, by the AP, the resource unit used by the STA to actually send the EHT TB PPDU, and improves spectrum utilization. In addition, a same station transmits consistent U-SIGs in different 80 MHz bandwidths, to reduce complexity of preamble preparation by the station. In addition, in this solution, an MRU/RU used by the station for actual transmission may be determined based on an index, and a meaning of each bit does not need to be separately parsed.

In a possible implementation of any one of the foregoing aspects, the second resource unit is determined based on a clear channel assessment result of the station before the station receives the trigger frame. It should be understood that after the second resource unit is determined, the station may determine the second indication information by using the second resource unit. In other words, the second indication information is also determined based on the clear channel assessment result of the station before the station receives the trigger frame.

It can be learned that in this solution, the second resource unit that may be actually occupied by the EHT TB PPDU is determined based on the clear channel assessment result before the trigger frame, so that there may be more sufficient time to prepare the EHT TB PPDU, and data of a plurality of versions does not need to be prepared. This reduces a requirement for a device capability.

In a possible implementation of any one of the foregoing aspects, the first indication information is located in an EHT variant user information field in the trigger frame. When the first indication information indicates that the station is allowed/supported to perform EHT TB PPDU transmission on the portion of the first resource unit allocated to the station, a station corresponding to the EHT variant user information field that carries the first indication information cannot participate in multi-user (multiple user, MU) multiple-input multiple-output (multiple-input multiple-output, MIMO) transmission. In other words, a station scheduled to perform uplink MU-MIMO transmission is not allowed to transmit a PPDU by using the portion of the allocated resource unit.

In a possible implementation of any one of the foregoing aspects, the first indication information is located in a common information field or the special user information field in the trigger frame. The first indication information indicates that the station is allowed to perform EHT TB PPDU transmission on the portion of the first resource unit allocated to the station, and the first indication information further implicitly indicates that the trigger frame does not include a user information field for scheduling MU-MIMO transmission. In other words, a station scheduled to perform uplink MU-MIMO transmission is not allowed to transmit a PPDU by using the portion of the allocated resource unit.

It can be learned that in this solution, when scheduling MU-MIMO transmission, the access point is restricted from scheduling a station participating in MU-MIMO transmission to transmit an EHT TB PPDU by using the portion of the allocated first resource unit, so that receiving at the receive end can be consistent. This reduces receiving complexity.

According to a fifth aspect, this application provides a communication apparatus, including a processor and a communication interface. The communication apparatus is configured to: send a trigger frame, where the trigger frame is used to trigger a station to perform EHT TB PPDU transmission, the trigger frame further indicates a first resource unit allocated to the station, the trigger frame includes first indication information, the first indication information indicates whether the station is allowed to perform EHT TB PPDU transmission on a portion of the first resource unit allocated to the station, the first resource unit is a resource unit including more than 996 tones, or the first resource unit is an MRU, and the MRU includes at least one resource unit including 996 or more tones; and receive an EHT TB PPDU.

Optionally, the processor is configured to generate the trigger frame.

According to a sixth aspect, this application provides a communication apparatus, including a processor and a communication interface. The communication apparatus is configured to: receive a trigger frame, where the trigger frame is used to trigger a station to perform extremely high throughput trigger-based physical layer protocol data unit EHT TB PPDU transmission, the trigger frame further indicates a first resource unit allocated to the station, the trigger frame includes first indication information, the first indication information indicates whether the station is allowed to perform EHT TB PPDU transmission on a portion of the first resource unit allocated to the station, the first resource unit is a resource unit including more than 996 tones, or the first resource unit is an MRU, and the MRU includes at least one resource unit including 996 or more tones; and send an EHT TB PPDU based on an indication of the first indication information.

Optionally, the processor is configured to generate the EHT TB PPDU.

According to a seventh aspect, this application provides an apparatus. The apparatus is implemented in a product form of a chip, and includes an input/output interface and a processing circuit. The apparatus is the chip in the access point in the first aspect. The input/output interface is configured to: output a trigger frame and process the trigger frame by using a radio frequency circuit; send the trigger frame by using an antenna, where the trigger frame is used to trigger a station to perform EHT TB PPDU transmission, the trigger frame further indicates a first resource unit allocated to the station, the trigger frame includes first indication information, the first indication information indicates whether the station is allowed to perform EHT TB PPDU transmission on a portion of the first resource unit allocated to the station, the first resource unit is a resource unit including more than 996 tones, or the first resource unit is an MRU, and the MRU includes at least one resource unit including 996 or more tones; and input an EHT TB PPDU received by the antenna and the radio frequency circuit.

Optionally, the processing circuit is configured to generate the trigger frame.

According to an eighth aspect, this application provides an apparatus. The apparatus is implemented in a product form of a chip, and includes an input/output interface and a processing circuit. The apparatus is the chip in the station in the second aspect. The input/output interface is configured to: input a trigger frame received by an antenna and a radio frequency circuit, where the trigger frame includes first indication information, the first indication information indicates whether the station is allowed to perform EHT TB PPDU transmission on a portion of the first resource unit allocated to the station, the first resource unit is a resource unit including more than 996 tones, or the first resource unit is an MRU, and the MRU includes at least one resource unit including 996 or more tones; output an EHT TB PPDU based on an indication of the first indication information, and process the EHT TB PPDU by using the radio frequency circuit; and send the EHT TB PPDU by using the antenna.

According to a ninth aspect, this application provides a computer-readable storage medium. The computer-readable storage medium stores program instructions. When the program instructions are run on a computer, the computer is enabled to perform the PPDU transmission method in the first aspect or the second aspect.

According to a tenth aspect, this application provides a computer program product including program instructions. When the computer program product runs on a computer, the computer is enabled to perform the PPDU transmission method in the first aspect or the second aspect.

According to embodiments of this application, when a portion of the MRU/RU allocated to the station is idle and another portion is busy, the station can be supported in transmitting the EHT TB PPDU on the idle portion of the RU, to improve spectrum resource utilization.

### BRIEF DESCRIPTION OF DRAWINGS

To describe the technical solutions in embodiments of this application more clearly, the following briefly describes the accompanying drawings used for describing the embodiments.
FIG. 1 is a schematic diagram of an architecture of a wireless communication system according to an embodiment of this application;
FIG. 2a is a schematic diagram of a structure of an access point according to an embodiment of this application;
FIG. 2b is a schematic diagram of a structure of a station according to an embodiment of this application;
FIG. 3 is a schematic flowchart of a trigger frame-based uplink scheduling transmission method in the 802.11ax standard;
FIG. 4 is a schematic diagram of a possible manner of a 996+484-tone MRU in the 802.11be standard;
FIG. 5 is a schematic diagram of a possible manner of a 996+484+242-tone MRU in the 802.11be standard;
FIG. 6 is a schematic diagram of a possible manner of a 2*996+484-tone MRU in the 802.11be standard;
FIG. 7 is a schematic diagram of a possible manner of a 3*996-tone MRU in the 802. 11be standard;
FIG. 8 is a schematic diagram of a possible manner of a 3*996+484-tone MRU in the 802. 11be standard;
FIG. 9 is a schematic diagram of a possible manner of a 2*996-tone RU in the 802.11be standard;
FIG. 10 is a schematic diagram of a possible manner of a 4*996-tone RU in the 802. 11be standard;
FIG. 11a is a schematic diagram of HE TB PPDU transmission in which carrier sensing is performed;
FIG. 11b is a schematic diagram of EHT TB PPDU transmission in which carrier sensing is performed;
FIG. 12 is a schematic flowchart of a PPDU transmission method according to an embodiment of this application;
FIG. 13A and FIG. 13B are a schematic diagram of a frame format of a trigger frame in 802.11be according to an embodiment of this application;
FIG. 14 is a schematic diagram of a time sequence of PPDU transmission according to an embodiment of this application;
FIG. 15 is a schematic diagram of a time sequence of other PPDU transmission according to an embodiment of this application;
FIG. 16 is a schematic diagram of a time sequence of still other PPDU transmission according to an embodiment of this application;
FIG. 17 is a schematic diagram of a frame format of an EHT TB PPDU according to an embodiment of this application;
FIG. 18 is a schematic diagram of a structure of a communication apparatus 1 according to an embodiment of this application;
FIG. 19 is a schematic diagram of a structure of a communication apparatus 2 according to an embodiment of this application; and
FIG. 20 is a schematic diagram of a structure of a communication apparatus 1000 according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may indicate A or B. The term "and/or" in this specification describes only an association relationship for describing associated objects and represents that three relationships may exist. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, the term "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "in an example", "for example", or the like is intended to present a related concept in a specific manner.

For ease of understanding the method provided in embodiments of this application, the following describes a system architecture of the method provided in embodiments of this application. It may be understood that the system architecture described in embodiments of this application is intended to describe the technical solutions in embodiments of this application more clearly, and do not constitute any limitation on the technical solutions provided in embodiments of this application.

An embodiment of this application provides a PPDU transmission method. Optionally, an EHT TB PPDU transmission method is provided. A trigger frame indicates that a station is allowed to perform EHT TB PPDU transmission on a portion of an allocated RU, so that the STA indicates, in a universal signal field (universal signal field, U-SIG) in an EHT TB PPDU, an RU actually occupied by the EHT TB PPDU (the RU actually occupied by the EHT TB PPDU is a portion of or all RUs in a plurality of RUs allocated to the station), or indicates whether the station performs transmission in each 80 MHz bandwidth. This helps an AP parse data of the EHT TB PPDU on the RU on which the EHT TB PPDU is actually transmitted, improves parsing efficiency, reduces receiving complexity of a receive end (which is the AP), supports the station in transmitting the EHT TB PPDU on the portion of the RU, and improves spectrum resource utilization. The PPDU transmission method may be applied to a wireless communication system, for example, a wireless local area network system. The PPDU transmission method may be implemented by a communication device in the wireless communication system or a chip or a processor in a communication device. The communication device may be an access point device or a station device. The communication device may alternatively be a wireless communication device that supports parallel transmission on a plurality of links. For example, the communication device may be referred to as a multi-link device (multi-link device, MLD) or a multi-band device. Compared with a communication device that supports only single-link transmission, the multi-link device has higher transmission efficiency and a higher throughput.

The technical solutions provided in this application may be applied to various communication systems, for example, a system using the 802.11 standard. For example, the 802.11 standard includes but is not limited to the 802.11be standard or a next-generation 802.11 standard. A scenario to which the technical solutions of this application are applicable includes communication between an AP and one or more STAs. In embodiments of this application, the term "communication" may also be described as "data transmission", "information transmission", or "transmission".

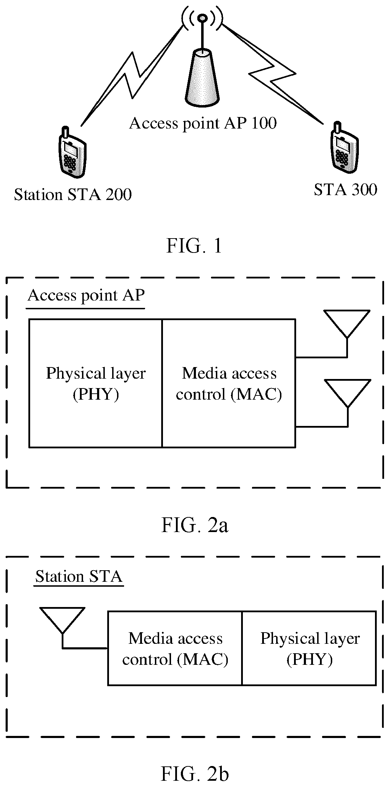

FIG. 1 is a schematic diagram of an architecture of a wireless communication system according to an embodiment of this application. As shown in FIG. 1, the wireless communication system may include one or more APs (for example, an AP 100 in FIG. 1) and one or more STAs (for example, a STA 200 and a STA 300 in FIG. 1). Both the AP and the STA support a WLAN communication protocol. The communication protocol may include the 802.11be (which is also referred to as Wi-Fi 7 or the EHT protocol), and may further include protocols such as the 802.11ax and the 802.11ac. Certainly, the communication protocol may further include a next-generation protocol of the 802.11be and the like with continuous evolution and development of communication technologies. A WLAN is used as an example. An apparatus for implementing the method in this application may be an AP or a STA in the WLAN, or a chip or a processing system installed in the AP or the STA.

Optionally, the access point (for example, the AP 100 in FIG. 1) in this application is an apparatus with a wireless communication function, supports communication according to a WLAN protocol, and has a function of communicating with another device (for example, a station or another access point) in the WLAN. It is clear that the access point may further have a function of communicating with another device. In the WLAN system, the access point may be referred to as an access point station (AP STA). The apparatus with a wireless communication function may be an entire device, or may be a chip or a processing system installed in an entire device. A device in which the chip or the processing system is installed may implement the method and the function in embodiments of this application under control of the chip or the processing system. The AP in this embodiment of this application is an apparatus that provides a service for the STA, and may support the 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip or a processing system in these devices in various forms, to implement the method and the function in embodiments of this application.

Optionally, the station (for example, the STA 200 and the STA 300 in FIG. 1) in this application is an apparatus with a wireless communication function, supports communication according to a WLAN protocol, and has a function of communicating with another station or access point in the WLAN. In the WLAN system, a station may be referred to as a non-access point station (non-access point station, non-AP STA). For example, the STA is any user communication device that allows a user to communicate with an AP and further communicate with a WLAN. The apparatus with a wireless communication function may be an entire device, or may be a chip or a processing system installed in an entire device. A device in which the chip or the processing system is installed may implement the method and the function in embodiments of this application under control of the chip or the processing system. For example, the STA may be user equipment that can connect to the Internet, for example, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), or a mobile phone. Alternatively, the STA may be an Internet of Things node in the Internet of Things, a vehicle-mounted communication apparatus in the Internet of Vehicles, an entertainment device, a game device or system, a global positioning system device, or the like. The STA may alternatively be a chip and a processing system in the foregoing terminals.

The WLAN system can provide high-speed and low-latency transmission. With continuous evolution of WLAN application scenarios, the WLAN system is to be applied to more scenarios or industries, for example, the Internet of Things industry, the Internet of Vehicles industry, the banking industry, enterprise offices, exhibition halls of stadiums, concert halls, hotel rooms, dormitories, wards, classrooms, supermarkets, squares, streets, production workshops and warehousing. Certainly, a device (for example, an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the Internet of Things, an entertainment terminal (for example, augmented reality (augmented reality, AR), virtual reality (virtual reality, VR), or another wearable device), a smart device in smart office (for example, a printer, a projector, a loudspeaker, or a stereo), an Internet of Vehicles device in the Internet of Vehicles, an infrastructure (for example, a vending machine, a self-service navigation station of a supermarket, a self-service cash register device, or a self-service ordering machine) in daily life scenarios, a device in a large sports and music venue, and the like. Specific forms of the STA and the AP are not limited in this embodiment of this application, and are merely examples for description herein.

It should be understood that the 802.11 standard focuses on parts of a physical layer (physical layer, PHY) part and a media access control (media access control, MAC) layer. For example, FIG. 2a is a schematic diagram of a structure of an access point according to an embodiment of this application. The AP may be of multi-antenna/multi-radio frequency, or may be of single-antenna/single-radio frequency. The antenna/radio frequency is used to send/receive a data packet (the data packet in this specification may also be referred to as a physical layer protocol data unit, namely, a PPDU). In an implementation, an antenna or a radio frequency part of the AP may be separated from a main body of the AP, that is, may be remotely disposed. In FIG. 2a, the AP may include a physical layer processing circuit and a media access control processing circuit. The physical layer processing circuit may be configured to process a physical layer signal, and the MAC layer processing circuit may be configured to process a MAC layer signal. For another example, FIG. 2b is a schematic diagram of a structure of a station according to an embodiment of this application. FIG. 2b is a schematic diagram of a structure of a single-antenna/single-radio-frequency STA. In an actual scenario, the STA may further be a multi-antenna/multi-radio-frequency device, and may be a device with more than two antennas. The antenna/radio frequency is used to send/receive a data packet. In an implementation, an antenna or a radio frequency part of the STA may be separated from a main body of the STA, that is, may be remotely disposed. In FIG. 2b, the STA may include a PHY processing circuit and a MAC processing circuit. The physical layer processing circuit may be configured to process a physical layer signal, and the MAC layer processing circuit may be configured to process a MAC layer signal.

The foregoing content briefly describes the system architecture in embodiments of this application. To better understand the technical solutions in embodiments of this application, the following describes content related to embodiments of this application.

### 1. Trigger frame-based uplink scheduling transmission method in the 802.11ax standard

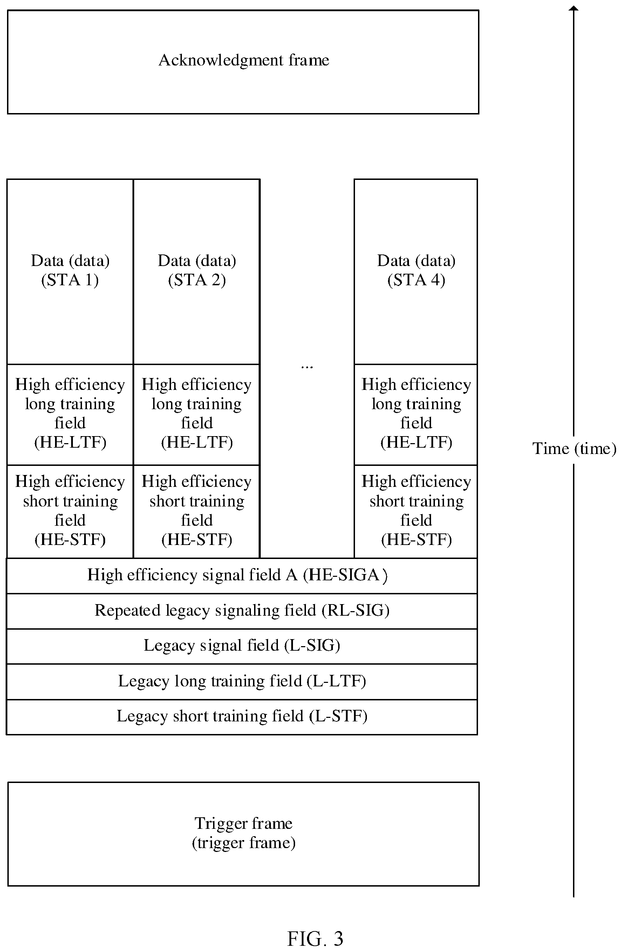

In a WLAN, before uplink data transmission, a STA needs to obtain a transmission opportunity (transmission opportunity, TXOP) through channel contention. For example, the STA performs channel contention based on an enhanced distributed channel access (enhanced distributed channel access, EDCA) manner, to obtain the transmission opportunity. In 802.11 ax, the trigger frame-based uplink scheduling transmission method is introduced. Specifically, FIG. 3 is a schematic flowchart of the trigger frame-based uplink scheduling transmission method in the 802.11ax standard. As shown in FIG. 3, the trigger frame-based uplink scheduling transmission method in the 802.11ax standard includes the following steps.

Step 1: An AP sends a trigger frame (trigger frame), where the trigger frame is used to schedule one or more STAs to send an HE TB PPDU. The trigger frame includes resource scheduling and another parameter that are used by one or more STAs to send an uplink sub-PPDU. For a specific frame format of the trigger frame, refer to corresponding descriptions in the 802.11ax standard. Details are not described herein. The trigger frame includes a common information (Common information) field and a user information list (User information list) field. The common information field includes common information to be read by all STAs, the user information list field includes one or more user information fields, and each user information field includes information that needs to be read by each STA. In the user information field, an association identifier (association identification 12, AID12) indicates an association identifier of a STA, and a resource unit allocation (RU allocation) subfield indicates a location of a resource unit (RU) allocated to the STA (the STA indicated by the AID12).

Step 2: After receiving the trigger frame, the STA parses the trigger frame to obtain a user information field that matches an AID of the STA, and then sends the HE TB PPDU on an RU indicated by a resource unit allocation subfield included in the user information field. For names and meanings of fields included in the HE TB PPDU, refer to corresponding descriptions in the 802.11ax standard. Details are not described herein. It should be understood that, in the HE TB PPDU, a legacy short training sequence field (legacy short training field, L-STF) to a high efficiency signal field A (high efficiency signal field A, HE-SIG-A) are all transmitted in a unit of 20 MHz. When a bandwidth is greater than 20 MHz, duplication transmission is performed on the L-STF to the HE-SIG-A in a unit of 20 MHz. In the HE TB PPDU, from a high efficiency short training sequence field (high efficiency short training field, HE-STF) to a data (Data) field, an entire bandwidth may be divided into one or more resource units, and the one or more resource units are used to transmit the HE-STF to the data field in the HE TB PPDU.

Step 3: After receiving an uplink multi-user PPDU sent by the one or more STAs, the AP returns an acknowledgment frame. The uplink multi-user PPDU includes the HE TB PPDU sent by the one or more STAs.

### 2. Some multi-resource unit (multiple RU, MRU)/RU formats supported by the 802.11be standard

In the 802.11ax standard, only one RU is allowed to be allocated to one STA. In the next-generation 802.11be standard, a plurality of RUs are allowed to be allocated to one STA. It should be understood that, allocating a plurality of RUs to one STA may also be understood as combining and allocating the plurality of RUs to the STA. Therefore, unless otherwise specified in the following, allocating a plurality of RUs to one STA and RU combination indicate a same meaning.

This application mainly considers a case in which an MRU/RU format supported by the 802.11be standard includes at least one resource unit (namely, a 996-tone RU) whose bandwidth is equal to 80 MHz. It should be understood that the 996-tone RU may be understood as an RU including 996 tones, and a bandwidth of each 996-tone RU is 80 MHz. The following describes several MRUs/RUs supported by the 802.11be standard. It should be understood that the 802.11be standard supports more than several MRU/RU formats listed in this specification. For details, refer to related descriptions in the 802.11be standard. An example is merely used for description herein.

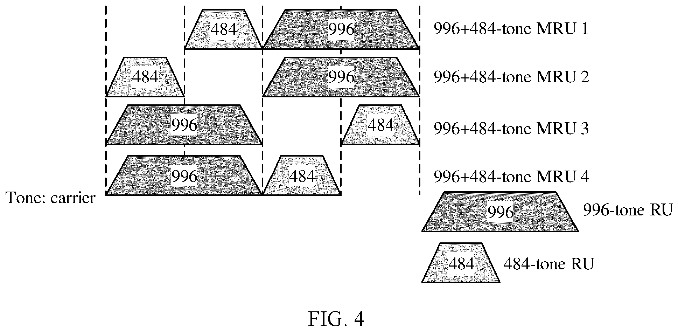

FIG. 4 is a schematic diagram of a possible manner of a 996+484-tone MRU in the 802.11be standard. The 996+484-tone MRU indicates a combination of one 996-tone RU and one 484-tone RU. The 484-tone RU may be understood as an RU including 484 tones. Therefore, FIG. 4 shows four combination manners of one 996-tone RU and one 484-tone RU that are supported by the 802.11be standard.

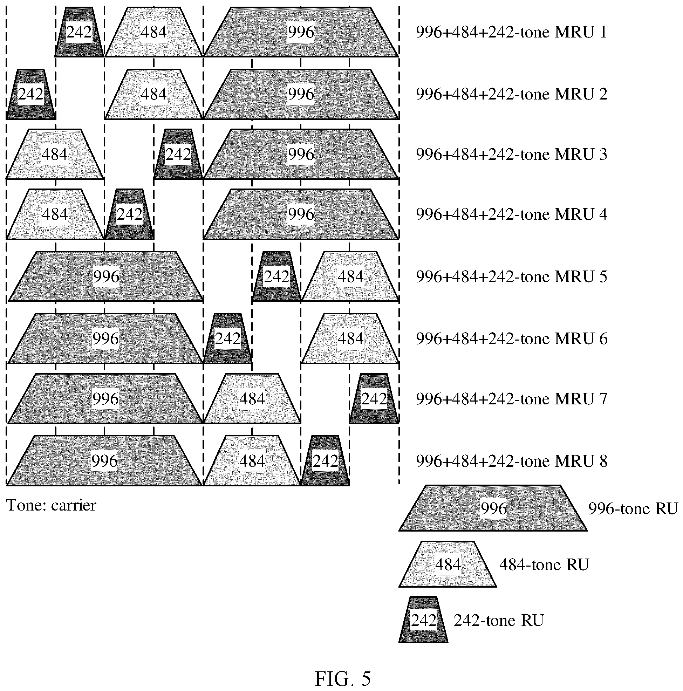

FIG. 5 is a schematic diagram of a possible manner of a 996+484+242-tone MRU in the 802.11be standard. The 996+484+242-tone MRU indicates a combination of one 996-tone RU, one 484-tone RU, and one 242-tone RU. The 242-tone RU may be understood as an RU including 242 tones. Therefore, FIG. 5 shows eight combination manners of one 996-tone RU, one 484-tone RU, and one 242-tone RU that are supported by the 802.11be standard.

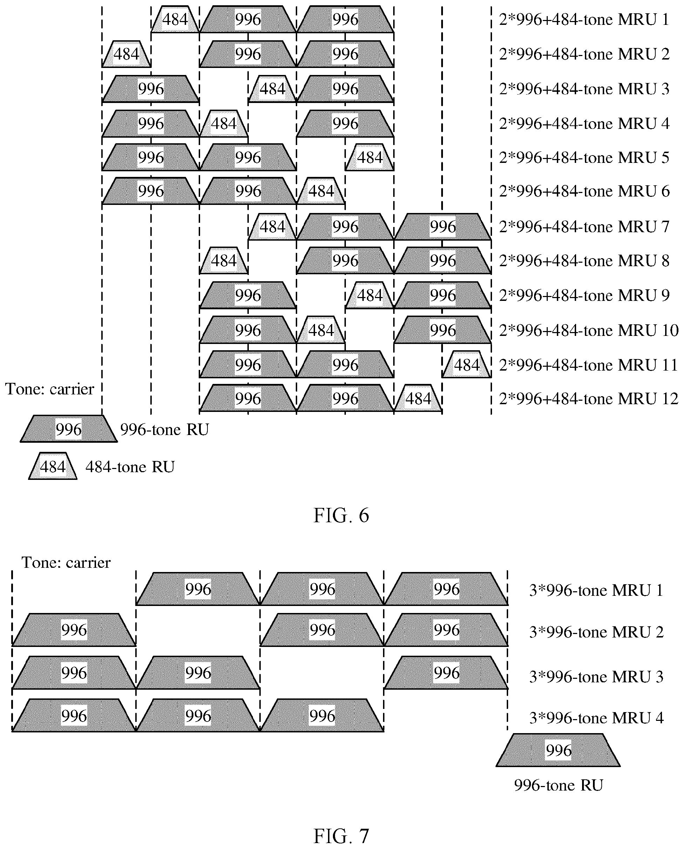

FIG. 6 is a schematic diagram of a possible manner of a 2*996+484-tone MRU in the 802.11be standard. The 2*996+484-tone MRU indicates a combination of two 996-tone RUs and one 484-tone RU. Therefore, FIG. 6 shows twelve combination manners of two 996-tone RUs and one 484-tone RU that are supported by the 802.11be standard.

FIG. 7 is a schematic diagram of a possible manner of a 3*996-tone MRU in the 802.11be standard. The 3*996-tone MRU indicates a combination of three 996-tone RUs. Therefore, FIG. 7 shows four combination manners of three 996-tone RUs that are supported by the 802.11be standard.

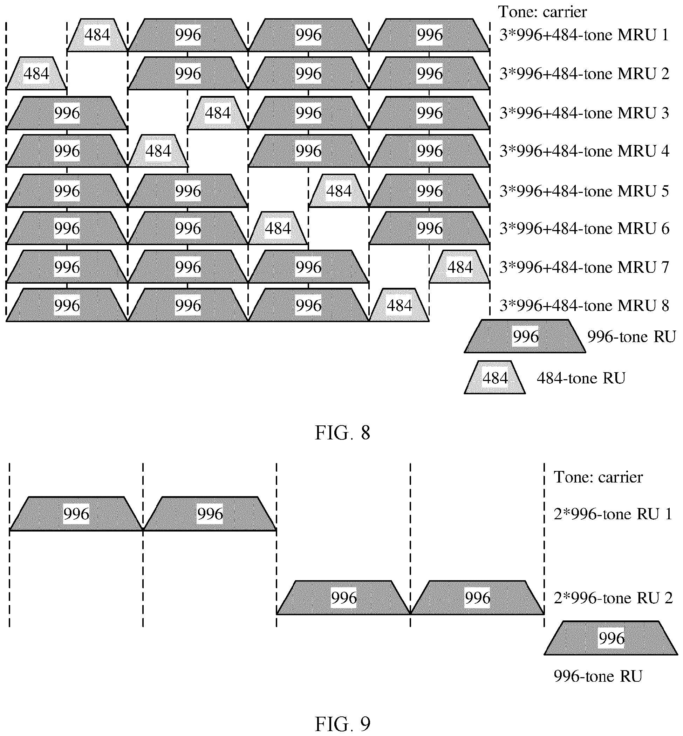

FIG. 8 is a schematic diagram of a possible manner of a 3*996+484-tone MRU in the 802.11be standard. The 3 *996+484-tone MRU indicates a combination of three 996-tone RUs and one 484-tone RU. Therefore, FIG. 8 shows twelve combination manners of three 996-tone RUs and one 484-tone RU that are supported by the 802.11be standard.

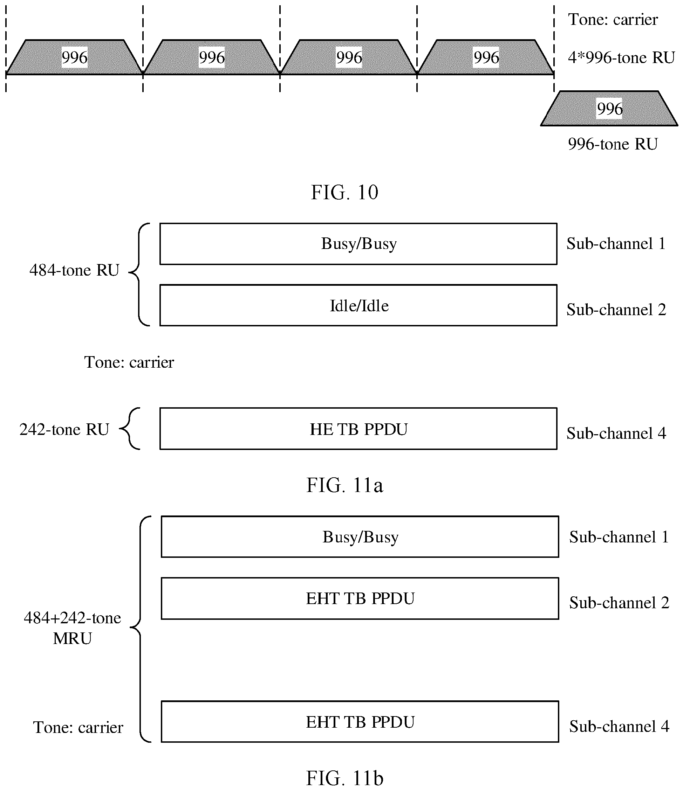

In addition, a combination of four 996-tone RUs is referred to as an RU, namely, a 4*996-tone RU, and a combination of two 996-tone RUs is also referred to as an RU, namely, a 2*996-tone RU. FIG. 9 is a schematic diagram of a possible manner of a 2*996-tone RU in the 802.11be standard. The 2*996-tone RU indicates a combination of two 996-tone RUs. FIG. 9 shows two combination manners of two 996-tone RUs that are supported by the 802.11be standard. FIG. 10 is a schematic diagram of a possible manner of a 4*996-tone RU in the 802.11be standard. The 4*996-tone RU indicates a combination of four 996-tone RUs. FIG. 10 shows one combination manner of four 996-tone RUs that is supported by the 802.11be standard.

### 3. Constraint condition of RU combination (that is, allocating a plurality of RUs to one STA) in the 802.11be standard

Because the 802.11be standard allows a plurality of RUs to be allocated to one STA, the 802.11be standard also specifies the constraint condition for allocating a plurality of RUs to one STA. (1) A small RU can only be combined with a small RU to form an MRU (small size RUs can only be combined with small size RUs to form small size MRUs), and a large RU can only be combined with a large RU to form an MRU (large size RUs can only be combined with large size RUs to form large size MRUs). In other words, a large RU cannot be combined with a small RU. RUs with a same size or including more than 242 tones are referred to as large RUs (RUs that are the same size or larger than 242-tone RUs are defined as large size RUs), and RUs including fewer than 242 tones are referred to as small RUs (RUs that are smaller than 242-tone RUs are defined as small size RUs). Optionally, a first constraint condition may further be understood as follows: A first-type RU can be combined with only the first-type RU to form an MRU, and a second-type RU can be combined with only the second-type RU to form an MRU. In other words, different types of RUs cannot be combined. Herein, the first type and the second type may be distinguished based on a size of an RU. For example, the first-type RU is an RU including 242 or more tones, and the second-type RU is an RU including fewer than 242 tones.
(2) For a combination of small RUs, the 802.11be standard currently supports two combination manners. Manner 1: Combination of a 106-tone RU and a 26-tone RU. Manner 2: Combination of a 52-tone RU and a 26-tone RU. For a specific combination manner, refer to related descriptions in the 802.11be standard document. Details are not described herein. The 106-tone RU indicates an RU including 106 tones, the 26-tone RU indicates an RU including 26 tones, and the 52-tone RU indicates an RU including 52 tones.
(3) For a combination of large RUs, the 802.11be standard currently supports two combination manners under an 80 MHz bandwidth Manner 1: Combination of a 484-tone RU and a 242-tone RU. Manner 2: Combination of a 242-tone RU and a 242-tone RU. For combination manners in a 160 MHz bandwidth, a 240 MHz bandwidth, and a 320 MHz bandwidth, this application considers a case in which an MRU/RU format supported by the 802.11be standard includes at least one 996-tone RU. A possible combination manner is shown in FIG. 4 to FIG. 10, and details are not described herein again.

### 4. Procedure of TB PPDU transmission in which carrier sensing (Carrier Sensing, CS) is performed

Optionally, the trigger frame includes a carrier sensing required (CS required) field indicating that the station needs to perform carrier sensing. Therefore, when performing HE TB PPDU transmission, the STA performs carrier sensing on one or more 20 MHz sub-channels on which an RU allocated to the station is located, and detects whether sensed energy exceeds a preset threshold. If it is detected that the sensed energy exceeds the preset threshold, it is determined that a 20 MHz sub-channel is busy. If it is detected that the sensed energy does not exceed the preset threshold, it is determined that a 20 MHz sub-channel is idle. In the 802.11ax standard, it is specified that if at least one 20 MHz sub-channel within a frequency range in which an RU allocated to a STA is located is busy, an HE TB PPDU cannot be transmitted, to prevent interference to other transmission. For example, FIG. 11a is a schematic diagram of HE TB PPDU transmission in which carrier sensing is performed. As shown in FIG. 11a, a resource unit allocated to a STA 1 is a 484-tone RU, a bandwidth corresponding to the 484-tone RU is 40 MHz, and two 20 MHz sub-channels are included: a sub-channel 1 and a sub-channel 2. The STA 1 performs carrier sensing before transmission. If the STA 1 finds that the sub-channel 1 is in a busy state and the sub-channel 2 is in an idle state, the STA 1 cannot perform transmission on the allocated 484-tone RU. For a STA 2, a resource unit allocated to the STA 2 is a 242-tone RU, and a bandwidth corresponding to the 242-tone RU is 20 MHz, and one 20 MHz sub-channel is included. The STA 2 performs carrier sensing before transmission. If the STA 2 finds that the 20 MHz sub-channel is in an idle state, the STA 2 may transmit the HE TB PPDU on the allocated 242-tone RU.

The 802.11be standard further considers a scenario in which a plurality of RUs may be allocated to one STA. Therefore, when performing EHT TB PPDU transmission, the STA also performs carrier sensing on one or more 20 MHz sub-channels on which the plurality of RUs allocated to the STA are located. Based on a result of carrier sensing, there are two possible transmission manners. A first possible transmission manner is similar to a transmission manner specified in the 802.11ax standard. If at least one 20 MHz sub-channel in a plurality of 20 MHz sub-channels on which a plurality of RUs are located is busy, an EHT TB PPDU cannot be transmitted. In a second possible transmission manner, in a plurality of 20 MHz sub-channels on which a plurality of RUs are located, if some 20 MHz sub-channels are busy, transmission may be performed in a bandwidth in which a 20 MHz sub-channel is idle. For example, FIG. 11b is a schematic diagram of EHT TB PPDU transmission in which carrier sensing is performed. As shown in FIG. 11b, a resource unit allocated to the STA is a 484+242-tone MRU, namely, a combination of one 484-tone RU and one 242-tone RU, an equivalent bandwidth corresponding to the 484+242-tone MRU is 60 MHz, and three 20 MHz sub-channels are included: a sub-channel 1, a sub-channel 2, and a sub-channel 4. The STA performs carrier sensing before transmission. If it is found that the sub-channel 2 and the sub-channel 4 are in an idle state, and the sub-channel 1 is in a busy state, the STA may transmit the EHT TB PPDU on the sub-channel 2 (namely, a portion of the allocated 484-tone RU) and the sub-channel 4 (namely, the allocated 242-tone RU).

It can be learned from the two possible transmission manners that in the first possible transmission manner, transmission can be performed only when all allocated 20 MHz sub-channels are idle. Consequently, this manner causes waste of spectrum resources. In the second possible transmission manner, transmission can be performed on some idle 20 MHz sub-channels, to more efficiently use spectrum resources. However, corresponding signaling needs to be used for indication, and receiving complexity of a receive end is increased.

Therefore, an embodiment of this application provides a PPDU transmission method. Specifically, an EHT TB PPDU transmission method is provided. A trigger frame indicates that a station is allowed to perform EHT TB PPDU transmission on a portion of an allocated RU, and the station indicates, in a U-SIG in an EHT TB PPDU, an RU actually occupied by the EHT TB PPDU (the RU actually occupied by the EHT TB PPDU is a portion of or all RUs in a plurality of RUs allocated to the station), or indicates whether the station performs transmission in each 80 MHz bandwidth. This can support the STA in sending the EHT TB PPDU by using a portion of or all the allocated RU/MRU, that is, when some 20 MHz sub-channels are busy, the EHT TB PPDU can also be sent, to improve spectrum resource utilization. In addition, this helps an AP parse data of the EHT TB PPDU on the RU on which the EHT TB PPDU is actually transmitted, reduces receiving complexity of a receive end (which is the AP), and improves parsing efficiency of the receive end (which is the AP).

The following describes in detail the technical solutions provided in this application with reference to more accompanying drawings.

It may be understood that the AP and the STA in this application may be a single-link device, or may be a functional entity or a functional unit in a multi-link device. For example, the AP in this application is an AP in an AP multi-link device, and the STA is a STA in a station multi-link device. This is not limited in this application.

Optionally, both the access point and the station in this application support the 802.11be protocol, and may further support another WLAN communication protocol, for example, the 802.11ax protocol and the 802.11ac protocol. It should be understood that the access point and the station in this application may further support a next-generation protocol of 802.11be. In other words, the method provided in this application is applicable to not only the 802.11be protocol, but also the next-generation protocol of 802.11be.

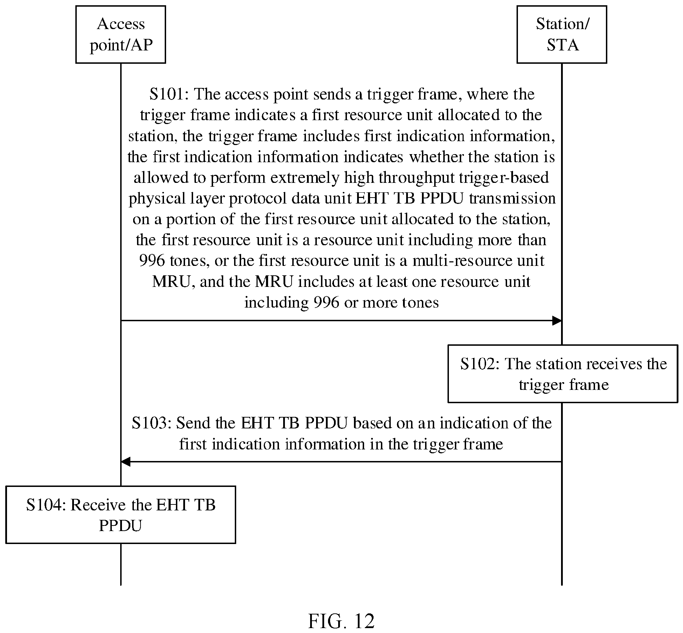

FIG. 12 is a schematic flowchart of a PPDU transmission method according to an embodiment of this application. As shown in FIG. 12, the PPDU transmission method includes but is not limited to the following steps.

S101: An access point sends a trigger frame, where the trigger frame indicates a first resource unit allocated to a station, the trigger frame includes first indication information, the first indication information indicates whether the station is allowed to perform extremely high throughput trigger-based physical layer protocol data unit EHT TB PPDU transmission on a portion of the first resource unit allocated to the station, the first resource unit is a resource unit including more than 996 tones, or the first resource unit is a multi-resource unit MRU, and the MRU includes at least one resource unit including 996 or more tones.

S102: The station receives the trigger frame.

Optionally, the access point generates and sends the trigger frame. The trigger frame is used to trigger one or more stations to perform EHT TB PPDU transmission, and the trigger frame further indicates a resource unit used by the one or more stations to perform transmission, and indicates that the one or more stations need to perform carrier sensing. For ease of description, one station is used as an example in this embodiment of this application. In other words, the trigger frame further indicates a first resource unit allocated to a (specific) station and indicates the station to perform carrier sensing. The first resource unit is a resource unit including more than 996 tones, or the first resource unit is an MRU, and the MRU includes at least one resource unit including 996 or more tones. For example, the first resource unit allocated to the station may be any MRU shown in FIG. 4 to FIG. 8 or any RU shown in FIG. 9 and FIG. 10. For example, if the first resource unit is a 996+484+242-tone MRU, it may be understood that the first resource unit includes one 996-tone RU, one 484-tone RU, and one 242-tone RU. For another example, if the first resource unit is a 3*996+484-tone MRU, it may be understood that the first resource unit includes three 996-tone RUs and one 484-tone RU. The first resource unit is an RU including N multiplied by 996 (namely, N*996) tones, where N is a positive integer greater than or equal to 2. For example, the first resource unit is a 2*996-tone RU. It may be understood that the first resource unit is a combination/concatenation of two 996-tone RUs. A bandwidth corresponding to one 996-tone RU is 80 MHz, and a case in which the MRU/RU includes at least one 996-tone RU is considered in this embodiment of this application. Therefore, the first resource unit may include a plurality of resource units whose bandwidths are greater than or equal to 80 MHz, or the first resource unit may include at least one resource unit whose bandwidth is greater than or equal to 80 MHz and at least one resource unit whose bandwidth is less than 80 MHz.

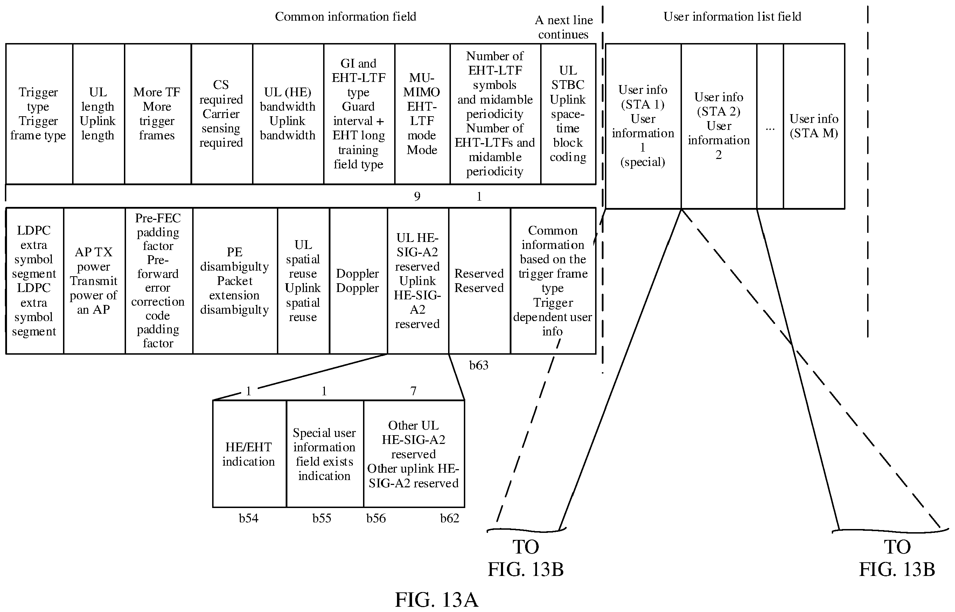

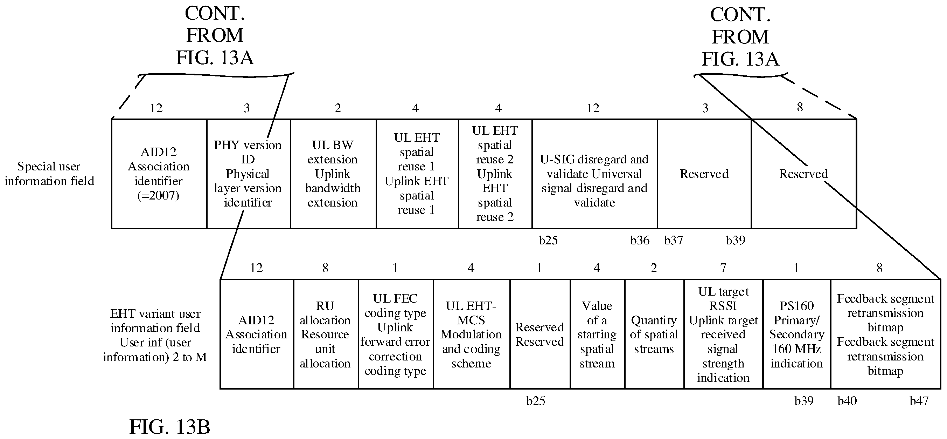

FIG. 13A and FIG. 13B are a schematic diagram of a frame format of a trigger frame in 802.11be according to an embodiment of this application. As shown in FIG. 13A and FIG. 13B, the trigger frame in 802.11be includes but is not limited to a common information field and a user information list field. The common information field includes common information that needs to be read by all STAs (the STA herein includes at least one of an HE STA and an EHT STA). The EHT STA in this specification is a station that supports the EHT protocol, the HE protocol, and an earlier protocol. In some scenarios and embodiments, the latest protocol supported by the HE STA in this application is the HE protocol, but the HE STA does not support a future Wi-Fi protocol, for example, the EHT protocol. However, it should not be understood that in this application, all HE STAs are limited to that none of them can support the future Wi-Fi protocol. The common information field includes but is not limited to a carrier sensing required (CS required) subfield, where the carrier sensing required subfield indicates that the station needs to perform carrier sensing. The user information list field includes but is not limited to one special user information field (a value of an association identifier 12 subfield is 2007) and one or more EHT variant user information fields. The special user information field includes common information that needs to be read by all EHT STAs. One EHT variant user information field includes information that needs to be read by one EHT STA. One EHT variant user information field includes but is not limited to an association identifier 12 (association identification 12, AID12) subfield and an RU allocation (RU allocation) subfield. The AID12 subfield indicates an association identifier of a STA, and the RU allocation subfield indicates a location of a resource unit allocated to the STA (namely, the STA indicated by the AID 12 subfield).

Optionally, the trigger frame includes the first indication information, the first indication information indicates whether the station is allowed/supported to perform EHT TB PPDU transmission on the portion of the first resource unit allocated to the station. It should be understood that the portion of the first resource unit allocated to the station may be referred to as an adaptive RU (adapted/adaptive RU). Similarly, a TB PPDU transmitted on the portion of the first resource unit allocated to the station may be referred to as an adaptive TB PPDU (adapted/adaptive TB PPDU). In other words, the first indication information indicates whether the station is allowed/supported to transmit the adaptive TB PPDU on the adapted RU.

Optionally, the first indication information may be located in the EHT variant user information field in the trigger frame. When the first indication information indicates that the station is allowed/supported to perform EHT TB PPDU transmission on the portion of the first resource unit allocated to the station (or the first indication information indicates that the station is allowed/supported to transmit the adaptive TB PPDU on the adaptive RU), a station corresponding to the EHT variant user information field that carries the first indication information cannot participate in multi-user (multiple user, MU) multiple-input multiple-output (multiple-input multiple-output, MIMO) transmission. In other words, the AP cannot schedule a same station to perform both uplink MU-MIMO transmission and adaptive RU transmission. In other words, a station scheduled to perform uplink MU-MIMO transmission is not allowed to transmit a PPDU by using an adaptive RU.

Optionally, the first indication information may be located in the common information field or the special user information field in the trigger frame. When the first indication information indicates that the station is allowed/supported to perform EHT TB PPDU transmission on the portion of the first resource unit allocated to the station (or the first indication information indicates that the station is allowed/supported to transmit the adaptive TB PPDU on the adaptive RU), the AP may not schedule multi-user (multiple user, MU) multiple-input multiple-output (multiple-input multiple-output, MIMO) transmission. In other words, the first indication information further implicitly indicates that the trigger frame does not include a user information field for scheduling MU-MIMO transmission. Alternatively, the first indication information directly indicates whether to schedule MU-MIMO transmission. If the first indication information indicates to schedule MU-MIMO transmission, it indicates that the station cannot perform EHT TB PPDU transmission on the portion of the first resource unit allocated to the station, or that the station cannot transmit the adaptive TB PPDU by using the adaptive RU. If the first indication information indicates that MU-MIMO transmission is not scheduled, it indicates that the station can perform EHT TB PPDU transmission on the portion of the first resource unit allocated to the station, or that the station can transmit the adaptive TB PPDU by using the adaptive RU.

If the AP triggers scheduling of MU MIMO transmission, a plurality of STAs share an RU. Therefore, in this case, if the STA is allowed to perform EHT TB PPDU transmission on a portion of the resource unit allocated to the STA, the plurality of STAs cannot synchronously change an RU for actual transmission. Consequently, inconsistent receiving at a receive end is caused, and receiving complexity is increased. For example, if the AP schedules MU MIMO transmission, and allocates one RU to two STAs for use, it is assumed that the RU includes four sub-channels: a sub-channel 1 to a sub-channel 4. It is assumed that a STA 1 senses that only the sub-channel 1 and the sub-channel 2 in the RU are idle, and a STA 2 senses that only the sub-channel 4 in the RU is idle. If the AP allows the STA to perform transmission on a portion of the resource unit allocated to the STA when the AP schedules MU MIMO transmission, the STA 1 modifies a U-SIG in an EHT TB PPDU of the STA 1, and the STA 2 also modifies a U-SIG in an EHT TB PPDU of the STA 2, where values of the two U-SIGs may be different. When receiving a multi-user PPDU on the RU, the AP cannot distinguish information of the STA 1 from information of the STA 2 on the RU. Consequently, the receive end cannot receive the PPDU in a unified manner, and receiving at the receive end is inconsistent.

Optionally, a length of the first indication information may be 1 bit. For example, setting the bit to 1 indicates that the station is allowed/supported to perform EHT TB PPDU transmission on the portion of the first resource unit allocated to the station, or setting the bit to 1 indicates that MU MIMO transmission is not scheduled. Setting the bit to 0 indicates that the station is not allowed/supported to perform EHT TB PPDU transmission on the portion of the first resource unit allocated to the station, or setting the bit to 0 indicates that MU MIMO transmission is scheduled. It should be understood that setting the bit to 1 indicates that the station is allowed/supported to perform EHT TB PPDU transmission on the portion of the first resource unit allocated to the station, or indicates that MU MIMO transmission is not scheduled. Setting the bit to 0 indicates that the station is allowed/supported to perform EHT TB PPDU transmission on the portion of the first resource unit allocated to the station, or indicates that MU MIMO transmission is not scheduled. This is not limited in this embodiment of this application.

It should further be understood that in this embodiment of this application, setting the first indication information to a first value (1 or 0) indicates that the station is allowed/supported to perform EHT TB PPDU transmission on the portion of the first resource unit allocated to the station, and further implicitly indicates that the trigger frame does not include a user information field for scheduling MU-MIMO transmission. Alternatively, setting the first indication information to a first value (1 or 0) indicates that MU-MIMO transmission is not scheduled, and further implicitly indicates that the station is allowed/supported to perform EHT TB PPDU transmission on the portion of the first resource unit allocated to the station.

S 103: The station sends the EHT TB PPDU based on an indication of the first indication information in the trigger frame.

S104: The access point receives the EHT TB PPDU.

Optionally, in this embodiment of this application, the first indication information indicates that the station is allowed/supported to perform EHT TB PPDU transmission on the portion of the first resource unit allocated to the station. Therefore, after receiving the trigger frame, the station determines, based on a clear channel assessment (clear channel assessment, CCA) result and the first resource unit allocated to the station, an available second resource unit (or an adaptive RU), namely, a resource unit actually occupied by the TB PPDU, and then generates and sends a TB PPDU (for example, an EHT TB PPDU) that adapts to the second resource unit. The second resource unit is the portion of or all the first resource unit allocated to the station. The following describes several possible manners of determining the second resource unit.

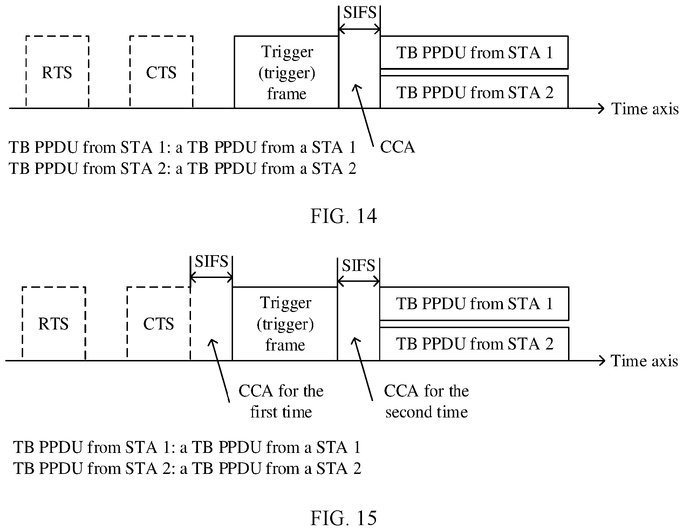

For a manner 1, refer to FIG. 14. FIG. 14 is a schematic diagram of a time sequence of PPDU transmission according to an embodiment of this application. As shown in FIG. 14, the station may determine, based on the clear channel assessment (clear channel assessment, CCA) result obtained after the trigger frame is received, states (idle or busy) of all 20 MHz sub-channels on which the first resource unit allocated to the station is located. Then, the second resource unit is determined based on all idle 20 MHz sub-channels on which the first resource unit is located, and a corresponding EHT TB PPDU is prepared (or generated) and sent. It should be understood that a resource unit actually occupied by the EHT TB PPDU is the second resource unit.

Manner 2: Due to a hardware or software limitation of the station, after viewing the CCA result after receiving the trigger frame, the station may not be ready to prepare the EHT TB PPDU occupying the second resource unit in a short interframe space (short interframe space, SIFS). Therefore, the station may prepare/generate in advance the EHT TB PPDU and a possible EHT TB PPDU (herein, the possible EHT TB PPDU is an EHT TB PPDU on an MRU/RU on which the EHT TB PPDU is actually transmitted) that occupy the RU/MRU (the first resource unit) allocated by the access point to the station. However, this means that the station needs to prepare a plurality of versions of EHT TB PPDUs, which significantly increases a requirement for a device capability.

Manner 3: The second resource unit is determined based on a clear channel assessment result of the station before the station receives the trigger frame and the first resource unit indicated by the trigger frame to be allocated to the station. It should be understood that after the second resource unit is determined, the second indication information may be determined by using the second resource unit. Specifically, refer to FIG. 15. FIG. 15 is a schematic diagram of a time sequence of other PPDU transmission according to an embodiment of this application. As shown in FIG. 15, the station may determine, based on the CCA result of the station before the trigger frame is received, states (idle or busy) of all 20 MHz sub-channels on which the first resource unit allocated to the station is located. The station determines, for the first time based on the CCA result of the station before the trigger frame is received, whether a channel is busy or idle. In a process of receiving the trigger frame, if it is found that the AP allocates an RU/MRU to the station, the station determines, based on a result indicating the channel is busy or idle and the RU/MRU (namely, the first resource unit) allocated to the station, a size of an RU (namely, the second resource unit) occupied by a to-be-replied EHT TB PPDU. If all 20 MHz sub-channels on which the RU/MRU (namely, the first resource unit) allocated by the AP to the station is located are idle, the RU/MRU (namely, the first resource unit) allocated by the AP to the station is used to prepare/generate the EHT TB PPDU. Optionally, if some 20 MHz sub-channels on which the RU/MRU (namely, the first resource unit) allocated by the AP to the station is located are idle, an adaptive RU/MRU (namely, the second resource unit) supported by the protocol is selected from the idle 20 MHz sub-channels, and the adaptive RU/MRU (namely, the second resource unit) supported by the protocol is used to prepare/generate the EHT TB PPDU. Optionally, if all 20 MHz sub-channels on which the RU/MRU allocated by the AP to the station is located are busy, or although some 20 MHz sub-channels are idle, no adaptive RU/MRU supported by the protocol can be matched on the idle 20 MHz sub-channels, the EHT TB PPDU does not need to be prepared. Alternatively, if all 20 MHz sub-channels on which the RU/MRU allocated by the AP to the station is located are busy, or although some 20 MHz sub-channels are idle, no adaptive RU/MRU supported by the protocol can be matched in the idle 20 MHz sub-channels, the station selects, according to experience or an algorithm of the station, an RU/MRU supported by the protocol to prepare/generate the EHT TB PPDU, or prepares/generates the EHT TB PPDU by using the RU/MRU (namely, the first resource unit) allocated by the AP to the station. After receiving the trigger frame, the station performs CCA again, and determines, for the second time, whether the channel is busy or idle. If all 20 MHz sub-channels occupied by a to-be-sent EHT TB PPDU (or a prepared EHT TB PPDU) are idle, the to-be-sent (or prepared) EHT TB PPDU is transmitted. If at least one 20 MHz sub-channel in all 20 MHz sub-channels of the to-be-sent EHT TB PPDU (or the prepared EHT TB PPDU) is busy, transmission is not performed.

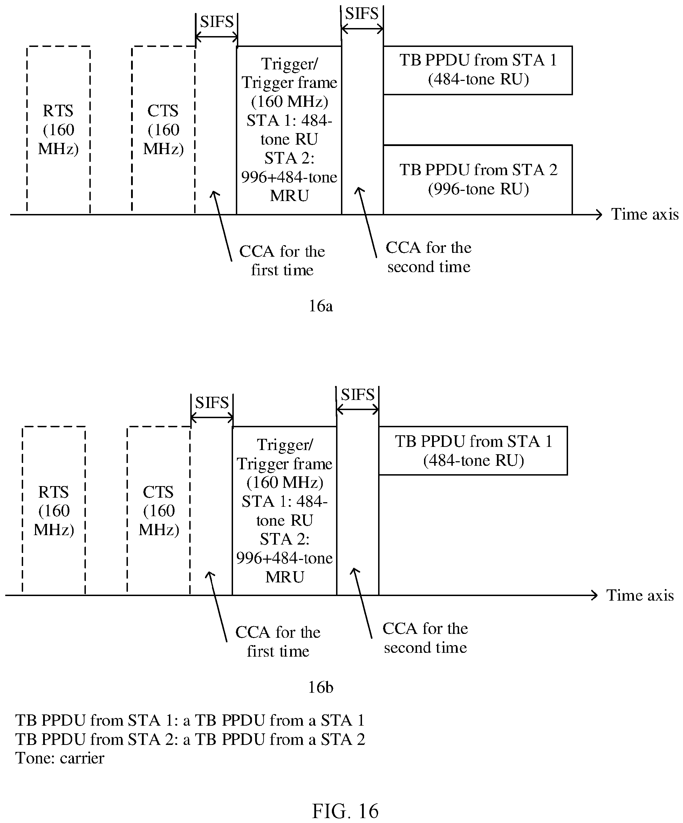

For example, refer to FIG. 16. FIG. 16 is a schematic diagram of a time sequence of still other PPDU transmission according to an embodiment of this application. As shown in FIG. 16, the second resource unit allocated to the STA 2 is a 996+484-tone MRU. If the station determines, based on the CCA result (namely, the CCA performed for the first time) of the station before the trigger frame is received, that a 996-tone RU is idle and a 484-tone RU is busy, the STA 2 prepares/generates an EHT TB PPDU transmitted on the 996-tone RU. After receiving the trigger frame, the station performs determining based on a CCA result (namely, the CCA performed for the second time) of the station after the trigger frame is received. If the station determines that the 996-tone RU is still idle, the station transmits the EHT TB PPDU (as shown in 16a in FIG. 16). In this case, if it is determined that at least one of four 20 MHz sub-channels on which the 996-tone RU is located is busy, transmission is not performed (as shown in 16b in FIG. 16).

It can be learned that in the manner 3, after viewing the CCA result before the trigger frame is received, the station has sufficient time to prepare the EHT TB PPDU. This means that the station does not need to prepare in advance the EHT TB PPDU occupying the first resource unit and the possible EHT TB PPDU occupying the second resource unit. In other words, the station does not need to prepare data of a plurality of versions, to reduce a requirement for a device capability. Further, the station determines, for the second time by viewing the CCA result after the trigger frame is received, whether a channel is busy or idle, and does not perform transmission when at least one 20 MHz sub-channel in all 20 MHz sub-channels of the to-be-sent (or prepared) EHT TB PPDU is busy, to reduce a collision possibility.

Optionally, the EHT TB PPDU includes second indication information, the second indication information indicates a second resource unit occupied by the EHT TB PPDU, and the second resource unit occupied by the EHT TB PPDU is the portion of or all the first resource unit allocated to the station. The second resource unit includes at least one resource unit whose size is greater than or equal to a 996-tone RU. In other words, the second resource unit includes at least one resource unit whose bandwidth is greater than or equal to 80 MHz. Alternatively, the second resource unit includes at least one resource unit whose size is greater than or equal to a 996-tone RU and at least one resource unit whose size is less than the 996-tone RU.

Optionally, the EHT TB PPDU includes the second indication information. One bit in the second indication information indicates whether the station transmits the EHT TB PPDU on one 996-tone resource unit in the allocated first resource unit. Alternatively, one bit in the second indication information indicates whether the station transmits the EHT TB PPDU on an 80 MHz bandwidth in the allocated first resource unit.

Optionally, after the station sends the EHT TB PPDU, correspondingly, the access point receives, on every 20 MHz bandwidth in the first resource unit allocated to the station, a U-SIG field in the EHT TB PPDU. After correctly receiving any U-SIG field from the station, the access point may parse, based on an indication of the second indication information in the U-SIG, information about the second resource unit occupied by the EHT TB PPDU, to obtain uplink data sent by the station.

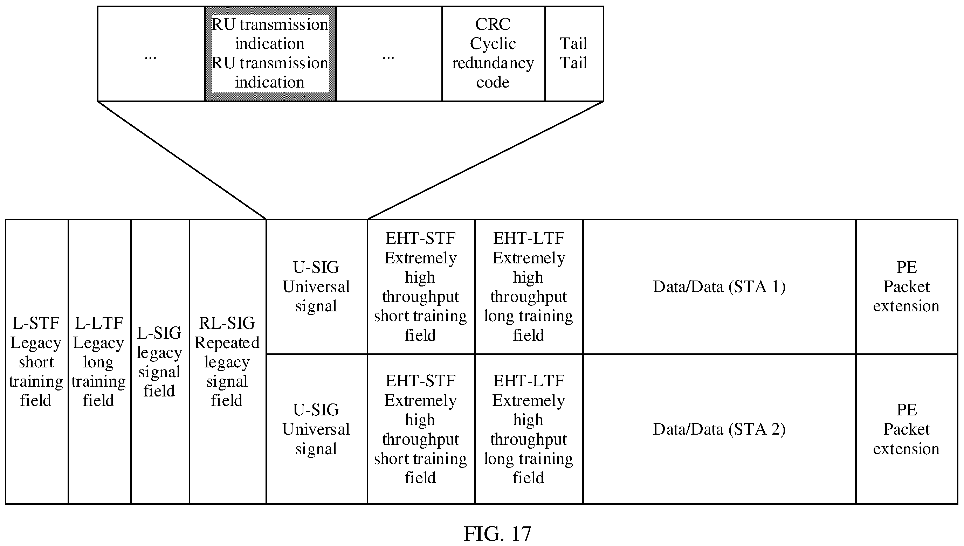

Optionally, the second indication information may be located in the U-SIG included in the EHT TB PPDU. FIG. 17 is a schematic diagram of a frame format of an EHT TB PPDU according to an embodiment of this application. As shown in FIG. 17, the EHT TB PPDU includes but is not limited to the following fields: a legacy short training field, a legacy long training field, a legacy signal field, a repeated legacy information field, a universal signal field, an extremely high throughput short training field, an extremely high throughput long training field, data, and packet extension. For meanings of the fields included in the EHT TB PPDU, refer to Table 1.

**Table 1: Meanings of fields in an EHT TB PPDU**

| Acronyms and abbreviations | Full name | Chinese description | Function |
|---|---|---|---|
| L-STF | Legacy short training field | Legacy short training field | Used for PPDU discovery, coarse synchronization, and automatic gain control |
| L-LTF | Legacy long training field | Legacy long training field | Used for fine synchronization and channel estimation |
| L-SIG | Legacy signal field A | Legacy signal field | Used to carry signal information related to a PPDU length, to ensure coexistence |
| RL-SIG | Repeated legacy signal field | Repeated legacy signal field | Same as an L-SIG, and used together with the L-SIG for automatic detection, to improve reliability |
| U-SIG | Universal SIG | Universal signal | Similar to an HE-SIG-A, a difference is that a unified signal field is used in an EHT PPDU and subsequent standards, and therefore, this field is referred to as the universal signal field |
| EHT-STF | Extremely high throughput short training field | Extremely high throughput short training field | Used for automatic gain control of a subsequent field |
| EHT-LTF | Extremely high throughput long training field | Extremely high throughput long training field | Used for channel estimation |
| Data | | Data | Carry data information |
| PE | Packet extension | Packet extension | Used to increase processing time of a receiver |

As shown in FIG. 17, the universal signal field (U-SIG) includes an RU transmission indication (RU transmission indication) field. The RU transmission indication field carries the second indication information indicating the second resource unit actually occupied by the EHT TB PPDU, or one bit in the second indication information indicates whether the station transmits the EHT TB PPDU on one 996-tone resource unit (namely, the 996-tone RU) in the allocated first resource unit. The U-SIG carries some information, for example, a cyclic redundancy code (cyclic redundancy code, CRC) shown in FIG. 17. However, there are some unused (or idle) bits in the U-SIG, and the bits may be used to carry the first indication information. Specifically, content that may be included in the U-SIG is shown in Table 2. It can be learned from Table 2 that B20 to B25 (6 bits in total) in a U-SIG-1 are not used (or are idle), and B2 in a U-SIG-2 and B11 to B15 (5 bits in total) in the U-SIG-2 are not used (or are idle). Therefore, for example, the unused (or idle) bits in the U-SIG may be used to carry the first indication information.

**Table 2: Content that may be included in a U-SIG**

| Bit | Field | Meaning |
|---|---|---|
| B0 to B2 (U-SIG-1) | Physical layer version indication | Indicates a version of a physical layer of the PPDU, where an EHT PPDU is indicated in this application |
| B3 to B5 | Bandwidth | Used to indicate a bandwidth of the PPDU |
| B6 | Uplink/Downlink (uplink, UL/downlink, DL) | Indicates an uplink or a downlink, where the uplink is indicated in this application |
| B7 to B12 | Basic service set (basic service set, BSS) color (BSS Color) | Indicates an identifier of the basic service set |
| B13 to B19 | Transmission opportunity (transmission opportunity, TXOP) | Used to indicate a transmission opportunity |
| B20 to B25 | Disregard (Disregard) | Based on setting of a U-SIG disregard and validate subfield (U-SIG Disregard and Validate subfield) in a trigger frame |
| B0 and B1 (U-SIG-2) | PPDU format and compression mode | Used to indicate a format of the PPDU, where an EHT TB PPDU is indicated in this application |
| B2 | Validate (Validate) | Based on setting of B25 to B30 in a U-SIG disregard and validate subfield (U-SIG Disregard and Validate subfield) in the trigger frame |
| B3 to B6 | Spatial reuse 1 (Spatial Reuse 1) | Indicates spatial reuse information |
| B7 to B10 | Spatial reuse 2 (Spatial Reuse 2) | Indicates spatial reuse information |
| B11 to B15 | Disregard (Disregard) | Based on setting of B32 to B36 in a U-SIG disregard and validate subfield (U-SIG Disregard and Validate subfield) in the trigger frame |
| B16 to B19 | Cyclic redundancy code (cyclic redundancy code, CRC) | Used to verify the U-SIG, where the CRC in the U-SIG and/or the EHT-SIG may be more bits, to improve reliability |
| B20 to B25 | Tail (Tail) | Tail bit, used to end encoding |

It should be understood that, because the U-SIG is copied and transmitted by using a 242-tone RU as a unit granularity in the first resource unit allocated to the station, in other words, the U-SIG is copied and transmitted on a plurality of 20 MHz sub-channels. Therefore, provided that the AP correctly receives a U-SIG on one 242-tone RU (or one 20 MHz sub-channel), the AP may obtain the second indication information carried in the U-SIG, to determine the RU used by the STA for actual transmission.

It should be understood that a name and a length of each field included in the U-SIG field shown in FIG. 17 are not limited in this embodiment of this application.

The foregoing describes in detail the frame format of the EHT TB PPDU. The following describes in detail a possible implementation of the second indication information.

Implementation 1: One bit in the second indication information indicates whether the station transmits the EHT TB PPDU on one 996-tone resource unit in the allocated first resource unit.

Implementation 1.1: The second indication information is represented by a bitmap with a fixed length. In other words, the RU transmission indication field in the U-SIG exists in a form of a bitmap. For example, the fixed length of the bitmap is 4 bits. One bit in the bitmap indicates whether the station transmits the EHT TB PPDU on one 996-tone resource unit (or one 80 MHz bandwidth). It may be understood that the station does not perform transmission on each 996-tone resource unit in a 320 MHz bandwidth. If the station does not have an allocated resource unit in one 996-tone resource unit, the station does not perform transmission on the 996-tone resource unit. In other words, if the station has no allocated resource unit in an 80 MHz bandwidth, the station cannot transmit the EHT TB PPDU in the 80 MHz bandwidth. In other words, only when a station has an allocated resource unit on a 996-tone resource unit, the station may transmit the EHT TB PPDU on the 996-tone resource unit.

Optionally, if all 20 MHz sub-channels on which the first resource unit allocated to the station is located are idle, the second indication information is set to a default value of a universal signal disregard and validate subfield (U-SIG Disregard and Validate subfield) in a special user information field in the trigger frame, to indicate the station to transmit the EHT TB PPDU on the allocated first resource unit. For specific values of bits in the universal signal disregard and validate subfield that are set to be values of the second information (or the RU transmission indication field) in the U-SIG, refer to Table 3 or current descriptions of 802.11be.

**Table 3**

| | |
|---|---|
| Bits in a special user information field (Bits in the special user information field) | Action to receiving a STA (Action to receiving STA) |
| B25 to B30 | Copy to B20 to B25 of the U-SIG-1 field |
| Bits in a special user information field (Bits in the special user information field) | Action to receiving a STA (Action to receiving STA) |
| | (disregard subfield)/Copy to B20-B25 of the U-SIG-1 field (disregard subfield) |
| B31 | Copy to B2 of the U-SIG-2 field (validate subfield) /Copy to B2 of the U-SIG-2 field (validate subfield) |
| B32 to B36 | Copy to B11 to B15 of the U-SIG-2 field (disregard subfield) /Copy to B11-B15 of the U-SIG-2 field (disregard subfield) |

For better understanding of the implementation 1.1, the following uses several examples for description. In the following several examples, the first indication information or the RU transmission indication field is represented by a bitmap with a length of 4 bits.

Example 1: An example in which the first resource unit allocated to the station is a 996+484-tone MRU is used. It is assumed that a 996-tone RU in the 996+484-tone MRU is located in a first 80 MHz bandwidth (in other words, the 996-tone RU in the 996+484-tone MRU corresponds to a 1^{st} bit in the bitmap/RU transmission indication field), and a 484-tone RU is located in a 40 MHz bandwidth in a second 80 MHz bandwidth (in other words, the 484-tone RU in the 996+484-tone MRU corresponds to a 2^{nd} bit in the bitmap/RU transmission indication field). Setting a bit in the RU transmission indication field (or the bitmap) to 0 indicates that the station does not perform transmission on a 996-tone resource unit (or an 80 MHz bandwidth) corresponding to the bit. Setting the bit to 1 indicates that the station performs transmission on the 996-tone resource unit (or the 80 MHz bandwidth) corresponding to the bit. It should be understood that whether setting the bit in the RU transmission indication field (or the bitmap) to 1 indicates that transmission is performed or setting the bit to 0 indicates that transmission is performed is not limited in this embodiment of this application. It should further be understood that four 80 MHz bandwidths (or four 996-tone RUs) corresponding to four bits in the RU transmission indication field (or the bitmap) may use a same manner or different manners to indicate that transmission is performed.

Refer to Table 4a. An example in which 1 indicates that transmission is performed and 0 indicates that transmission is not performed is used in Table 4a. The four 80 MHz bandwidths (or the four 996-tone RUs) use a same manner to indicate that transmission is performed, that is, the four 80 MHz bandwidths (or the four 996-tone RUs) use 1 to indicate that transmission is performed. Refer to Table 4b. An example in which 0 indicates that transmission is performed and 1 indicates that transmission is not performed is used in Table 4b. The four 80 MHz bandwidths (or the four 996-tone RUs) use a same manner to indicate that transmission is performed, that is, the four 80 MHz bandwidths (or the four 996-tone RUs) use 0 to indicate that transmission is performed. Refer to Table 4c. In Table 4c, the four 80 MHz bandwidths (or the four 996-tone RUs) use different manners to indicate that transmission is performed. For example, a first 80 MHz bandwidth and a third 80 MHz bandwidth use 1 to indicate that transmission is performed, and a second 80 MHz bandwidth and a fourth 80 MHz bandwidth use 0 to indicate that transmission is performed.

Table 4a, Table 4b, and Table 4c show busy/idle states of RUs in the 996+484-tone MRU in different indication manners, and values and meanings of corresponding RU transmission indication fields.

**Table 4a**

| Busy/Idle state of a 996-tone RU | Busy/Idle state of a 484-tone RU | Value of an RU transmission indication field (bitmap) | Meaning of the RU transmission indication field |
|---|---|---|---|
| Idle | Busy | 1000 | Transmitted only on the 996-tone RU |
| Idle | Idle | Copy a value of a U-SIG disregard and validate (U-SIG Disregard And Validate) subfield | Transmitted on all RUs (transmitted on the 996+484-tone MRU) |
| Busy | Busy/Idle | 0 0 0 0 | Not transmitted |

**Table 4b**

| Busy/Idle state of a 996-tone RU | Busy/Idle state of a 484-tone RU | Value of an RU transmission indication field (bitmap) | Meaning of the RU transmission indication field |
|---|---|---|---|
| Idle | Busy | 0 1 1 1 | Transmitted only on the 996-tone RU |
| Idle | Idle | Copy a value of a U-SIG disregard and validate (U-SIG Disregard And Validate) subfield | Transmitted on all RUs (transmitted on the 996+484-tone MRU) |
| Busy | Busy/Idle | 1 1 1 1 | Not transmitted |

**Table 4c**

| Busy/Idle state of a 996-tone RU | Busy/Idle state of a 484-tone RU | Value of an RU transmission indication field (bitmap) | Meaning of the RU transmission indication field |
|---|---|---|---|
| Idle | Busy | 1 1 0 1 | Transmitted only on the 996-tone RU |
| Idle | Idle | Copy a value of a U-SIG disregard and validate (U-SIG Disregard And Validate) subfield | Transmitted on all RUs (transmitted on the 996+484-tone MRU) |
| Busy | Busy/Idle | 0 1 0 1 | Not transmitted |

In Table 4a to Table 4c, "idle" means that all 20 MHz sub-channels on which an RU in a same column as "idle" is located are in an idle state, and "busy" means that at least one 20 MHz sub-channel in the 20 MHz sub-channels on which an RU in a same column as "busy" is located is in a busy state. Table 4a is used as an example to describe meanings of rows in the table. For meanings of rows in Table 4b and Table 4c, refer to meanings of corresponding rows in Table 4a. Details are not described herein. As shown in Table 4a, if all 20 MHz sub-channels on which the 996-tone RU is located are in an idle state, and at least one 20 MHz sub-channel in the 20 MHz sub-channels on which the 484-tone RU is located is in a busy state, the value of the RU transmission indication field (bitmap) is 1000, to indicate the station to transmit the EHT TB PPDU on the allocated 996-tone RU. In short, when the 996-tone RU is idle and the 484-tone RU is busy, the value of the RU transmission indication field (bitmap) is 1000, to indicate the station to transmit the EHT TB PPDU on the allocated 996-tone RU. If all 20 MHz sub-channels on which the 996-tone RU is located and all 20 MHz sub-channels on which the 484-tone RU is located are in an idle state, the value of the RU transmission indication field (bitmap) directly copies a value of a corresponding bit in the U-SIG disregard and validate subfield (U-SIG Disregard And Validate) in the trigger frame, to indicate the station to transmit the EHT TB PPDU on all the allocated resource unit (namely, the second resource unit). In short, when both the 996-tone RU and the 484-tone RU are idle, the value of the RU transmission indication field (bitmap) copies the value of the corresponding bit in the U-SIG disregard and validate subfield, to indicate the station to transmit the EHT TB PPDU on the allocated 996+484-tone MRU. If at least one 20 MHz sub-channel in the 20 MHz sub-channels on which the 996-tone RU is located is in an idle state, regardless of whether the 484-tone RU is idle or busy, the station does not perform transmission, and the value of the RU transmission indication field (bitmap) is 0000.

Example 2: An example in which the first resource unit allocated to the station is a 996+484+242-tone MRU is used. It is assumed that a 996-tone RU in the 996+484+242-tone MRU is located in a first 80 MHz bandwidth, a 484-tone RU is located in a first 40 MHz bandwidth in a second 80 MHz bandwidth, and a 242-tone RU is located in a fourth 20 MHz bandwidth in the second 80 MHz bandwidth. In other words, in the 996+484+242-tone MRU, the 996-tone RU corresponds to a 1^{st} bit in the bitmap/RU transmission indication field, and the 484-tone RU and the 242-tone RU correspond to a 2^{nd} bit in the bitmap/RU transmission indication field. Setting a bit in the RU transmission indication field (or the bitmap) to 0 indicates that the station does not perform transmission on a 996-tone resource unit (or an 80 MHz bandwidth) corresponding to the bit. Setting the bit to 1 indicates that the station performs transmission on the 996-tone resource unit (or the 80 MHz bandwidth) corresponding to the bit. Refer to Table 5. An example in which 1 indicates that transmission is performed and 0 indicates that transmission is not performed is used in Table 5. Four 80 MHz bandwidths (or four 996-tone RUs) use a same manner to indicate that transmission is performed, that is, the four 80 MHz bandwidths (or the four 996-tone RUs) use 1 to indicate that transmission is performed. Table 5 shows busy/idle states of RUs in the 996+484+242-tone MRU, and values and meanings of corresponding RU transmission indication fields.

**Table 5**

| Busy/Idle state of a 996-tone RU | Busy/Idle state of a 484-tone RU | Busy/Idle state of a 242-tone RU | Value of an RU transmission indication field (bitmap) | Meaning of the RU transmission indication field |
|---|---|---|---|---|
| Idle | Busy | Busy | 1000 | Transmitted only on the 996-tone RU |
| Idle | Idle | Busy | 1000 | Transmitted only on the 996-tone RU |
| Idle | Busy | Idle | 1000 | Transmitted only on the 996-tone RU |
| Idle | Idle | Idle | Copy a value of a U-SIG disregard and validate (U-SIG Disregard And Validate) subfield | Transmitted on all RUs (transmitted on the 996+484+242-tone MRU) |
| Busy | Busy/Idle | Busy/Idle | 0 0 0 0 | Not transmitted |

Meanings of "busy" and "idle" in Table 5 are the same as meanings of "busy" and "idle" in Table 4a to Table 4c, and details are not described herein again. As shown in Table 5, when the 996-tone RU is idle and at least one of the 484-tone RU and the 242-tone RU is busy, the value of the RU transmission indication field (bitmap) is 1000, to indicate the station to transmit the EHT TB PPDU on the allocated 996-tone RU. When the 996-tone RU, the 484-tone RU, and the 242-tone RU are idle, the value of the RU transmission indication field (bitmap) directly copies the value of the corresponding bit in the U-SIG disregard and validate subfield (U-SIG Disregard And Validate) in the trigger frame, to indicate the station to transmit the EHT TB PPDU on the allocated 996+484+242-tone MRU. When the 996-tone RU is busy, regardless of whether the 484-tone RU and the 242-tone RU are idle or busy, the station does not perform transmission, and the value of the RU transmission indication field (bitmap) is 0000.

Example 3: An example in which the first resource unit allocated to the station is a 2*996-tone RU is used. It is assumed that in the 2*996-tone RU, one 996-tone RU is located in a first 80 MHz bandwidth, and the other 996-tone RU is located in a second 80 MHz bandwidth. In other words, in the 2*996-tone RU, one 996-tone RU corresponds to a 1^{st} bit in the bitmap/RU transmission indication field, and the other 996-tone RU corresponds to a 2^{nd} bit in the bitmap/RU transmission indication field. Setting a bit in the RU transmission indication field (or the bitmap) to 0 indicates that the station does not perform transmission on a 996-tone resource unit (or an 80 MHz bandwidth) corresponding to the bit. Setting the bit to 1 indicates that the station performs transmission on the 996-tone resource unit (or the 80 MHz bandwidth) corresponding to the bit. Refer to Table 6. An example in which 1 indicates that transmission is performed and 0 indicates that transmission is not performed is used in Table 6. Four 80 MHz bandwidths (or four 996-tone RUs) use a same manner to indicate that transmission is performed, that is, the four 80 MHz bandwidths (or the four 996-tone RUs) use 1 to indicate that transmission is performed. Table 6 shows busy/idle states of RUs in the 2*996-tone RU, and values and meanings of corresponding RU transmission indication fields.

**Table 6**

| Busy/Idle state of a 996-tone RU | Busy/Idle state of a 996-tone RU | Value of an RU transmission indication field (bitmap) | Meaning of the RU transmission indication field |
|---|---|---|---|
| Idle | Busy | 1000 | Transmitted only on the first 996-tone RU |
| Idle | Idle | Copy a value of a U-SIG disregard and validate (U-SIG Disregard And Validate) subfield | Transmitted on all RUs (transmitted on the 2*996-tone RU) |
| Busy | Idle | 0 1 0 0 | Transmitted only on the second 996-tone RU |
| Busy | Busy | 0 0 0 0 | Not transmitted |

Meanings of "busy" and "idle" in Table 6 are the same as meanings of "busy" and "idle" in Table 4a to Table 4c, and details are not described herein again. As shown in FIG. 6, when the first 996-tone RU is idle and the second 996-tone RU is busy, the value of the RU transmission indication field (bitmap) is 1000, to indicate the station to transmit the EHT TB PPDU on the allocated first 996-tone RU. When both the first 996-tone RU and the second 996-tone RU are idle, the value of the RU transmission indication field (bitmap) directly copies the value of the corresponding bit in the U-SIG disregard and validate subfield, to indicate the station to transmit the EHT TB PPDU on the allocated 2*996-tone RU. When the first 996-tone RU is busy and the second 996-tone RU is idle, the value of the RU transmission indication field (bitmap) is 0100, to indicate the station to transmit the EHT TB PPDU on the allocated second 996-tone RU. When both the first 996-tone RU and the second 996-tone RU are busy, the station does not perform transmission, and the value of the RU transmission indication field (bitmap) is 0000.

It should be understood that busy/idle states of RUs in a 3 *996-tone MRU and a 4*996-tone RU, and values and meanings of corresponding RU transmission indication fields are similar to those shown in Table 6. Examples are not enumerated herein.

Example 4: An example in which the first resource unit allocated to the station is a 2*996+484-tone MRU is used. It is assumed that in the 2*996+484-tone MRU, one 996-tone RU is located in a first 80 MHz bandwidth, the other 996-tone RU is located in a second 80 MHz bandwidth, and a 484-tone RU is located in a 40 MHz bandwidth in a third 80 MHz bandwidth. In other words, in the 2*996+484-tone MRU, one 996-tone RU corresponds to a 1^{st} bit in the bitmap/RU transmission indication field, the other 996-tone RU corresponds to a 2^{nd} bit in the bitmap/RU transmission indication field, and the 484-tone RU corresponds to a 3^{rd} bit in the bitmap/RU transmission indication field. Setting a bit in the RU transmission indication field (or the bitmap) to 0 indicates that the station does not perform transmission on a 996-tone resource unit (or an 80 MHz bandwidth) corresponding to the bit. Setting the bit to 1 indicates that the station performs transmission on the 996-tone resource unit (or the 80 MHz bandwidth) corresponding to the bit. Refer to Table 7. An example in which 1 indicates that transmission is performed and 0 indicates that transmission is not performed is used in Table 7. Four 80 MHz bandwidths (or four 996-tone RUs) use a same manner to indicate that transmission is performed, that is, the four 80 MHz bandwidths (or the four 996-tone RUs) use 1 to indicate that transmission is performed. Table 7 shows busy/idle states of RUs in the 2*996+484-tone MRU, and values and meanings of corresponding RU transmission indication fields.

**Table 7**

| Busy/Idle state of a 996-tone RU | Busy/Idle state of a 996-tone RU | Busy/Idle state of a 484-tone RU | Value of an RU transmission indication field (bitmap) | Meaning of the RU transmission indication field |
|---|---|---|---|---|
| Idle | Busy | Busy | 1000 | Transmitted only on the first 996-tone RU |
| Idle | Idle | Busy | 1100 | Transmitted on the first 996-tone RU and the second 996-tone RU |
| Idle | Busy | Idle | 1000 | Transmitted on the first 996-tone RU |
| Idle | Idle | Idle | Copy a value of a U-SIG disregard and validate (U-SIG Disregard And Validate) subfield | Transmitted on all RUs (transmitted on the 2*996+484-tone MRU) |
| Busy | Idle | Busy | 0100 | Transmitted only on the second 996-tone RU |
| Busy | Idle | Idle | 0100 | Transmitted on the second 996-tone RU |
| Busy | Busy | Busy/Idle | 0000 | Not transmitted |

Meanings of "busy" and "idle" in Table 7 are the same as meanings of "busy" and "idle" in Table 4a to Table 4c, and details are not described herein again. As shown in FIG. 7, when the first 996-tone RU is idle, the second 996-tone RU is busy, and the 484-tone RU is busy, the value of the RU transmission indication field (bitmap) is 1000, to indicate the station to transmit the EHT TB PPDU on the allocated first 996-tone RU. When the first 996-tone RU and the second 996-tone RU are idle, and the 484-tone RU is busy, the value of the RU transmission indication field (bitmap) is 1100, to indicate the station to transmit the EHT TB PPDU on the allocated first 996-tone RU and second 996-tone RU. When the first 996-tone RU is idle, the second 996-tone RU is busy, and the 484-tone RU is idle, the value of the RU transmission indication field (bitmap) is 1000, to indicate the station to transmit the EHT TB PPDU on the allocated first 996-tone RU. When the first 996-tone RU, the second 996-tone RU, and the 484-tone RU are idle, the value of the RU transmission indication field (bitmap) directly copies the value of the corresponding bit in the U-SIG disregard and validate subfield, to indicate the station to transmit the EHT TB PPDU on the allocated 2*996+484-tone RU. When the first 996-tone RU is busy, the second 996-tone RU is idle, and the 484-tone RU is busy, the value of the RU transmission indication field (bitmap) is 0100, to indicate the station to transmit the EHT TB PPDU on the allocated second 996-tone RU. When the first 996-tone RU is busy, and the second 996-tone RU and the 484-tone RU are idle, the value of the RU transmission indication field (bitmap) is 0100, to indicate the station to transmit the EHT TB PPDU on the allocated second 996-tone RU. When the first 996-tone RU and the second 996-tone RU are busy, regardless of whether the 484-tone RU is busy or idle, the station does not perform transmission, and the value of the RU transmission indication field (bitmap) is 0000.

It should be understood that busy/idle states of RUs in the 3*996+484-tone MRU and the 2*996+484-tone MRU, and values and meanings of corresponding RU transmission indication fields are similar to those shown in Table 7. Examples are not enumerated herein.

In the foregoing examples, an example in which the length of the bitmap (or the RU transmission indication field) is 4 bits is used for description. Certainly, to save bits, the first indication information may be represented by a bitmap with fewer bits. For example, a bitmap with a length of 2 bits is used, where one bit indicates whether the station transmits the EHT TB PPDU in one 160 MHz bandwidth. Similarly, the first indication information may further be represented by a bitmap with more bits. For example, a bitmap with a length of 16 bits is used, where one bit indicates whether the station transmits the EHT TB PPDU in one 20 MHz bandwidth.

Optionally, the U-SIG is copied and transmitted on each 20 MHz sub-channel, and the station transmits same U-SIGs in a same 80 MHz bandwidth. If the second resource unit includes a plurality of RUs, and the plurality of RUs belong to different 80 MHz bandwidths, the station transmits same U-SIGs in different 80 MHz bandwidths in which the second resource unit is located. For example, in Table 7, a row in which "idle idle busy" is located (the bitmap is 1 1 0 0) is used as an example. In other words, the first resource unit is a 2*996+484-tone MRU, and the second resource unit includes a first 996-tone RU and a second 996-tone RU. In this case, a U-SIG transmitted in a first 80 MHz bandwidth in which the first 996-tone RU is located is the same as a U-SIG transmitted in a second 80 MHz bandwidth in which the second 996-tone RU is located.

It can be learned that in the implementation 1.1, transmission may be implemented on some sub-channels, and it can further be ensured that U-SIGs transmitted by a same station in different 80 MHz bandwidths are consistent. This not only facilitates receiving at a receive end, but also reduces complexity of preparing a preamble by the station. In addition, whether transmission is performed in each 80 MHz bandwidth (or each 996-tone resource unit) may be clearly indicated by using a bitmap.

Implementation 1.2: The second indication information is represented by a bitmap, and the bitmap includes two parts: a first bit and a second bit. One bit in the first bit indicates whether the station transmits the EHT TB PPDU on one 996-tone resource unit (or one 80 MHz bandwidth). One bit in the second bit indicates whether the station transmits the EHT TB PPDU on one 242-tone resource unit (or one 20 MHz bandwidth in the 80 MHz bandwidth) in the 996-tone resource unit. Alternatively, one bit in the second bit indicates whether the station transmits the EHT TB PPDU on one 242-tone resource unit (one 20 MHz bandwidth in the 80 MHz bandwidth on which transmission is performed) in the 996-tone resource unit on which transmission is performed. It should be understood that the bit in the second bit may alternatively be divided by using a granularity of 40 MHz. In other words, one bit in the second bit may indicate whether the station transmits the EHT TB PPDU on one 484-tone resource unit (or one 40 MHz bandwidth in the 80 MHz bandwidth) in the 996-tone resource unit.

A length of the first bit may be a fixed length, for example, 4 bits. A length of the second bit may be related to the length of the first bit or indication content. For example, the length of the second bit is equal to a length obtained by subtracting the length of the first bit from an unused/spare bit in the U-SIG, or the length of the second bit is obtained by multiplying four by a quantity, indicated by the first bit, of 80 MHz bandwidths on which transmission is performed. In other words, a length of the bitmap may be represented as 4+4*x bits (it should be understood that the asterisk "*" in this specification indicates multiplication), and one bit in first four bits (namely, the first bit) indicates whether the station performs transmission on one 996-tone resource unit (or one 80 MHz bandwidth). Herein, transmission includes two cases: partial transmission and complete transmission, x may be a fixed value, for example, 4. Alternatively, x may be equal to a quantity of 996-tone RUs (or 80 MHz bandwidth on which transmission is performed) on which transmission is performed and that are indicated by the first four bits, and the 996-tone RU is completely allocated to the station. Every 4 bits in last 4*x bits (namely, the second bit) indicates whether the station transmits the EHT TB PPDU on each 242-tone resource unit (or each 20 MHz bandwidth in one 80 MHz bandwidth) in one 996-tone resource unit.

For example, the first resource unit allocated to the station is a 996+484-tone MRU. It is assumed that in the 996+484-tone MRU, a 996-tone RU is located in a first 80 MHz bandwidth, and a 484-tone RU is located in a second 40 MHz bandwidth in a second 80 MHz bandwidth. In other words, in the 996+484-tone MRU, the 996-tone RU corresponds to a 1^{st} bit in the bitmap/RU transmission indication field, and the 484-tone RU corresponds to a 2^{nd} bit in the bitmap/RU transmission indication field. If all 20 MHz sub-channels on which the 996-tone RU is located are in an idle state, x may be 1, that is, a length of the second bit is 4 (namely, 4* 1) bits. In this case, each bit in the second bit may be set to 1, to indicate that the EHT TB PPDU is transmitted on each 242-tone RU in the 996-tone RU. Alternatively, x may be a fixed value, and last 4*x bits (namely, the second bit) are any specified default value (for example, 4 bits corresponding to the first 996-tone RU are all 1s or all 0s), to indicate that the station performs transmission on the 996-tone RU. If in the 996+484-tone MRU, the first 20 MHz sub-channel on which the 996-tone RU is located is busy, and all other 20 MHz sub-channels (namely, the second to the fourth 20 MHz sub-channels on which the 996-tone RU is located and two 20 MHz sub-channels on which the 484-tone RU is located) are idle, the first four bits (namely, the first bit) are 1100, to indicate that the station performs transmission on the first 996-tone RU and the second 996-tone RU (or the 80 MHz bandwidth). Last four bits (a value of x is 1) are 0111, to indicate that the station does not perform transmission on the first 242-tone RU in the 996-tone RU, and performs transmission on remaining three 242-tone RUs.

For example, the first resource unit allocated to the station is a 996+484-tone MRU. It is assumed that in the 996+484-tone MRU, a 996-tone RU is located in a first 80 MHz bandwidth, and a 484-tone RU is located in a second 40 MHz bandwidth in a second 80 MHz bandwidth. In other words, in the 996+484-tone MRU, the 996-tone RU corresponds to a 1^{st} bit in the bitmap/RU transmission indication field, and the 484-tone RU corresponds to a 2^{nd} bit in the bitmap/RU transmission indication field. If in the 996+484-tone MRU, the first 20 MHz sub-channel and the second 20 MHz sub-channel on which the 996-tone RU is located are busy, and all other 20 MHz sub-channels (namely, the third 20 MHz sub-channel and the fourth 20 MHz sub-channel on which the 996-tone RU is located and two 20 MHz sub-channels on which the 484-tone RU is located) are idle, the first four bits (namely, the first bit) are 1100, to indicate that the station performs transmission on the first 996-tone RU and the second 996-tone RU (or the 80 MHz bandwidth). Last four bits (a value of x is 1) are 0011, to indicate that the station does not perform transmission on the first 242-tone RU and the second 242-tone RU in the 996-tone RU, and performs transmission on remaining two 242-tone RUs.

Optionally, the implementation 1.2 may be used in combination with the implementation 1.1. In a possible design, when some 20 MHz sub-channels on which the 996-tone RU in the first resource unit allocated to the station is located are busy, the second bit may indicate whether the station transmits the EHT TB PPDU on each 242-tone RU (or the 20 MHz bandwidth) in the 996-tone RU (or the 80 MHz bandwidth) on which transmission is performed. In other words, the station is allowed/supported to transmit the EHT TB PPDU on some sub-channels in the allocated complete 996-tone RU. For example, the first resource unit allocated to the station is a 996+484-tone MRU. If some 20 MHz sub-channels on which a 996-tone RU in the 996+484-tone MRU is located are busy (for example, in the fourth row in Table 3a), the other 20 MHz sub-channels are idle, and all 20 MHz sub-channels on which a 484-tone RU is located are busy. First four bits in the bitmap (or the RU transmission indication field) are set to 1000, and a plurality of bits may be added to the bitmap (or the RU transmission indication field), to indicate whether the station transmits the EHT TB PPDU on each 242-tone RU (or a 20 MHz bandwidth) in the 996-tone RU (or the 80 MHz bandwidth).

It can be learned that in the implementation 1.2, whether transmission is performed on each 20 MHz bandwidth in an 80 MHz bandwidth on which transmission is performed may be subdivided, to more effectively use spectrum resources.

Implementation 1.3: The second indication information may alternatively be represented by a bitmap with a variable length, and the length of the bitmap is equal to a quantity of 996-tone resource units (or 80 MHz bandwidths) in the first resource unit allocated to the station. One bit in the bitmap indicates whether the station transmits the EHT TB PPDU on one 996-tone resource unit (or one 80 MHz bandwidth) in the first resource unit. If the first resource unit includes at least one resource unit whose size is less than the 996-tone RU, the station cannot independently use the at least one resource unit whose size is less than the 996-tone RU for transmission, and the at least one resource unit whose size is less than the 996-tone RU needs to perform transmission together with all other 996-tone resource units in the first resource unit.

For example, the first resource unit allocated to the station is a 996+484-tone MRU. It is assumed that in the 996+484-tone MRU, a 996-tone RU is located in a first 80 MHz bandwidth, and a 484-tone RU is located in a second 80 MHz bandwidth. A length of the bitmap is 1 bit. The bit may indicate whether the station transmits the EHT TB PPDU on the allocated 996-tone RU. Optionally, the length of the bitmap may alternatively be 2 bits. A 1^{st} bit indicates whether the station transmits the EHT TB PPDU in the allocated first 996-tone RU, and a 2^{nd} bit may indicate whether the station transmits the EHT TB PPDU in the allocated 484-tone RU in the second 996-tone RU.

For example, the first resource unit allocated to the station is a 996+484+242-tone

MRU. It is assumed that in the 996+484+242-tone MRU, a 996-tone RU is located in a first 80 MHz bandwidth, and a 484-tone RU and a 242-tone RU are located in a second 80 MHz bandwidth. A length of the bitmap is 1 bit. The bit may indicate whether the station transmits the EHT TB PPDU on the allocated 996-tone RU. Optionally, the length of the bitmap may alternatively be 2 bits. A 1^{st} bit may indicate whether the station transmits the EHT TB PPDU in the allocated first 996-tone RU, and a 2^{nd} bit may indicate whether the station transmits the EHT TB PPDU in the allocated 484-tone RU and 242-tone RU in the second 996-tone RU.

For example, the first resource unit allocated to the station is a 2*996+484-tone MRU. It is assumed that in the 2*996+484-tone MRU, a first 996-tone RU is located in a first 80 MHz bandwidth, a second 996-tone RU is located in a second 80 MHz bandwidth, and a 484-tone RU is located in a third 80 MHz bandwidth. A length of the bitmap is 2 bits. A 1^{st} bit may indicate whether the station transmits the EHT TB PPDU in the allocated first 996-tone RU, and a 2^{nd} bit may indicate whether the station transmits the EHT TB PPDU in the allocated second 996-tone RU. Optionally, the length of the bitmap may alternatively be 3 bits. A 1^{st} bit may indicate whether the station transmits the EHT TB PPDU in the allocated first 996-tone RU, a 2^{nd} bit may indicate whether the station transmits the EHT TB PPDU in the allocated second 996-tone RU, and a 3^{rd} bit may indicate whether the station transmits the EHT TB PPDU in the allocated 484-tone RU in the third 996-tone RU.

It can be learned that, in the implementation 1.3, a quantity of bits may be flexibly set, to reduce bit overheads to some extent.

It should be understood that any combination of the implementation 1.1, the implementation 1.2, and the implementation 1.3 may form a new implementation, and parts that are related to a same or similar concept or solution may be mutually referenced or combined. For example, the implementation 1.2 is used in combination with the implementation 1.3.

Implementation 2: The second indication information indicates a second resource unit occupied by the EHT TB PPDU.

Optionally, the second resource unit is a resource unit, actually occupied by the EHT TB PPDU, in the first resource unit allocated to the station (or the second resource unit is a resource unit, actually used to transmit the EHT TB PPDU, in the first resource unit), and the resource unit actually occupied by the EHT TB PPDU may be a portion of or all the first resource unit. The second resource unit may include at least one resource unit (or a resource unit whose bandwidth is greater than or equal to 80 MHz) whose size is greater than or equal to a 996-tone RU. Alternatively, the second resource unit may include at least one resource unit (or a resource unit whose bandwidth is greater than or equal to 80 MHz) whose size is greater than or equal to a 996-tone RU and at least one resource unit (or a resource unit whose bandwidth is less than 80 MHz) whose size is less than the 996-tone RU.

Optionally, if the second resource unit includes at least one resource unit (or a resource unit whose bandwidth is greater than or equal to 80 MHz) whose size is greater than or equal to the 996-tone RU and at least one resource unit whose size is less than the 996-tone RU (or a resource unit whose bandwidth is less than 80 MHz), the station transmits same U-SIGs in different 80 MHz bandwidths in which the second resource unit is located. For example, in Table 7, a row in which "idle idle busy" is located (the bitmap is 1 1 0 0) is used as an example. In other words, the first resource unit is a 2*996+484-tone MRU, and the second resource unit includes a first 996-tone RU and a second 996-tone RU. In this case, a U-SIG transmitted in a first 80 MHz bandwidth in which the first 996-tone RU is located is the same as a U-SIG transmitted in a second 80 MHz bandwidth in which the second 996-tone RU is located.

Optionally, if the second resource unit includes at least one resource unit (or a resource unit whose bandwidth is greater than or equal to 80 MHz) whose size is greater than or equal to the 996-tone RU and at least one resource unit (or a resource unit whose bandwidth is less than or 80 MHz) whose size is less than the 996-tone RU, the resource unit (or the resource unit whose bandwidth is less than or 80 MHz) whose size is less than the 996-tone RU and the resource unit, in the second resource unit, (or the resource unit whose bandwidth is greater than or equal to 80 MHz) whose size is greater than or equal to the 996-tone RU transmit the EHT TB PPDU together. In other words, in this embodiment of this application, only when all 20 MHz sub-channels on which all 996-tone RUs (namely, a resource unit whose bandwidth is equal to 80 MHz) in the first resource unit allocated to the station are located are idle, another resource unit (namely, a resource unit whose bandwidth is less than 80 MHz) whose quantity of tones is less than 996 in the first resource unit is allowed to transmit the EHT TB PPDU with the idle 996-tone RUs together. In other words, for a single station, in this embodiment of this application, the single station performs transmission on an entire 80 MHz resource unit or does not perform transmission on the entire 80 MHz resource unit. If a resource unit whose bandwidth is less than 80 MHz is allowed to independently perform transmission, U-SIGs may be inconsistent in one 80 MHz bandwidth. Consequently, receiving complexity of the receive end increases. For example, if a resource unit allocated by the AP to the STA 1 is a 996+484-tone MRU, a resource unit allocated to the STA 2 is also a 996+484-tone MRU, and two 484-tone RUs belong to a same 996-tone RU or a same 80 MHz bandwidth. If the STA 1 detects that an allocated 996-tone RU is busy, the allocated 484-tone RU is idle, and the STA 2 detects that both an allocated 996-tone RU and the allocated 484-tone RU are idle, the STA 1 modifies a value in the U-SIG, and the STA 2 does not modify a value in the U-SIG (that is, the STA 2 directly copies content in the U-SIG disregard and validate subfield in the trigger frame). Therefore, for the AP, U-SIGs in one 80 MHz to which the two 484-tone RUs belong are different, and receiving complexity of the AP increases.

The resource unit (or the resource unit whose bandwidth is less than 80 MHz) whose size is less than the 996-tone RU includes one or more of the following: a resource unit whose quantity of carriers is 484, namely, a 484-tone RU; a resource unit whose quantity of carriers is 242, namely, a 242-tone RU; and a resource unit whose quantity of carriers is less than 242. The resource unit whose quantity of carriers is less than 242 includes but is not limited to the following types: a resource unit whose quantity of carriers is 106, namely, a 106-tone RU; a resource unit whose quantity of carriers is 52, namely, a 52-tone RU; and a resource unit whose quantity of carriers is 26, namely, a 26-tone RU. It should be understood that, the resource unit whose bandwidth is less than 80 MHz includes a single resource unit whose quantity of tones is less than 996, and may further be a combination of a plurality of resource units whose quantity of tones is less than 996. In other words, the resource unit whose bandwidth is less than 80 MHz may also be any combination of at least two of a 484-tone RU, a 242-tone RU, a 106-tone RU, a 52-tone RU, and a 26-tone RU, provided that an equivalent bandwidth of a resource unit obtained through combination is less than 80 MHz. For example, an equivalent bandwidth of a combination of one 242-tone RU and two 106-tone RUs is less than 80 MHz.

Specifically, the second indication information (or the RU transmission indication field) may be an index value. The index value identifies a resource unit or a combination of a plurality of resource units, or the index value identifies the second resource unit. In other words, in the implementation 2, the index value indicates the second resource unit actually occupied by the EHT TB PPDU, or indicates the second resource unit actually used to transmit the EHT TB PPDU. The second resource unit is the portion of or all the first resource unit allocated to the station. Whether the second resource unit is the portion of or all the first resource unit allocated to the station needs to be specifically determined based on a result of clear channel assessment of the station. It is clear that a bandwidth of the second resource unit is less than or equal to a bandwidth of the first resource unit.

Table 8 shows a maximum quantity of indexes required for each type of MRU/RU including at least one 996-tone RU. As shown in Table 8, each possible MRU/RU for actual transmission is represented by a unique index. For example, the second resource unit is a 996+484-tone MRU. As shown in FIG. 4, there are four combination manners (that is, a quantity of possible MRU/RU combinations is four) of one 996-tone RU and one 484-tone RU. For each combination manner of the 996-tone RU and the 484-tone RU, as shown in Table 3a, there are three cases. Therefore, a maximum quantity of possible MRUs/RUs (or a maximum quantity of required indexes) for actual transmission is 4 * 3 = 12. Similarly, for example, the second resource unit is a 2*996-tone RU. As shown in FIG. 9, there are two combination manners (that is, a possible quantity of MRU/RU combinations is two) of two 996-tone RUs. For each combination manner, as shown in Table 5, there are four cases. Therefore, a maximum possible quantity of MRUs/RUs (or a maximum quantity of required indexes) for actual transmission is 2 * 4 = 8.

**Table 8**

| Indicated resource unit MRU/RU (or a combination of a plurality of resource units, a meaning, or a description) | Quantity of possible MRU/RU combinations | Maximum possible quantity of MRUs/RUs for actual transmission (maximum quantity of required indexes) |
|---|---|---|
| 996+484-tone MRU | 4 | 12 |
| 996+484+242-tone MRU | 8 | 40 |
| 2*996-tone RU | 2 | 8 |
| 2*996+484-tone MRU | 12 | 84 |
| 3*996-tone MRU | 4 | 32 |
| 3*996+484-tone MRU | 8 | 120 |
| 4*996-tone RU | 1 | 16 |

It can be learned that in the implementation 2, transmission may further be implemented on some sub-channels, and it can further be ensured that U-SIGs transmitted by a same station in different 80 MHz bandwidths are consistent. This not only facilitates receiving at a receive end. In addition, in the implementation 2, an MRU/RU used by the station for actual transmission may be determined based on an index, and a meaning of each bit does not need to be separately parsed.

Optionally, in the implementation 1.1, the implementation 1.2, and the implementation 2, to further improve spectrum utilization, the station may further be allowed to transmit the EHT TB PPDU on a possible idle RU and a combination of idle RUs in the first resource unit allocated to the station. For example, the first resource unit allocated to the station is a 3*996+484-tone MRU. It is assumed that a combination manner of the first resource unit is shown as the 3*996+484-tone MRU 8 in FIG. 8. If both a first 996-tone RU and a 484-tone RU are busy, and a second 996-tone RU and a third 996-tone RU are idle, the station is allowed to transmit the EHT TB PPDU on the allocated second 996-tone RU and third 996-tone RU.

Optionally, in the implementation 1.1, the implementation 1.2, and the implementation 2, to further reduce a possibility of transmission supported by the AP and the STA, the station may further be limited to perform transmission only when a combination of an idle RU and an idle RU in the first resource unit allocated to the station are RUs/MRUs supported by the standard. For the implementation 2, this constraint may reduce a possible quantity of MRUs/RUs for actual transmission in Table 8, to reduce a quantity of required indexes. For example, the first resource unit allocated to the station is a 3*996+484-tone MRU. It is assumed that a combination manner of the first resource unit is shown as the 3 *996+484-tone MRU 8 in FIG. 8. If both a first 996-tone RU and a 484-tone RU are busy, even if a second 996-tone RU and a third 996-tone RU are idle, the station cannot transmit the EHT TB PPDU on the allocated second 996-tone RU and third 996-tone RU.

It should be understood that the idle RU in this embodiment of this application means that all 20 MHz sub-channels on which the RU is located are idle.

It can be learned that, in this embodiment of this application, the trigger frame indicates that the station is allowed to use the adaptive RU for transmission, and the U-SIG indicates the RU actually occupied by the EHT TB PPDU or indicates whether the station transmits the EHT TB PPDU in each 80 MHz bandwidth. Therefore, when a portion of the MRU/RU allocated to the station is idle, and another portion of the MRU/RU is busy, the STA is supported to send the EHT TB PPDU by using a portion of or all the allocated RU/MRU. In other words, when some sub-channels of the RU/MRU allocated to the STA are busy, the STA may also send the EHT TB PPDU, to improve reliability of obtaining, by the AP, a resource unit used by the STA to actually send the EHT TB PPDU, and improve spectrum utilization. This further helps the AP parse the data of the EHT TB PPDU on the RU on which the EHT TB PPDU is actually transmitted, reduces receiving complexity of the receive end (which is the AP), and improves parsing efficiency of the receive end (which is the AP). In addition, in this embodiment of this application, it can further be ensured that U-SIGs transmitted by a same station in different 80 MHz bandwidths are consistent. This not only facilitates receiving at a receive end, but also reduces complexity of preparing a preamble by the station.

The foregoing content describes in detail the methods provided in this application. To facilitate implementation of the foregoing solutions in embodiments of this application, embodiments of this application further provide corresponding apparatuses or devices.

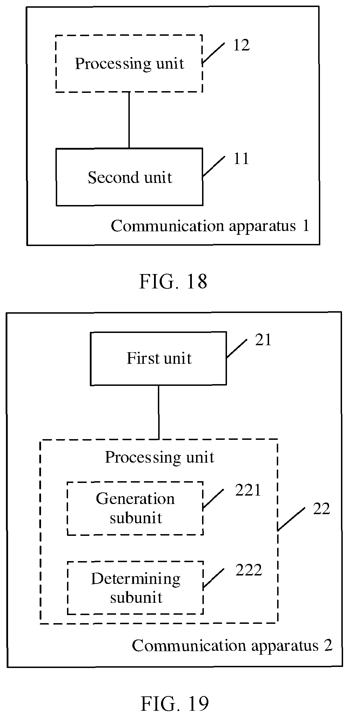

In embodiments of this application, the access point and the station may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used. The following describes in detail communication apparatuses in embodiments of this application with reference to FIG. 18 to FIG. 20. The communication apparatus is an access point or a station. Further, the communication apparatus may be an apparatus in an AP, or the communication apparatus may be an apparatus in a STA.

When an integrated unit is used, refer to FIG. 18. FIG. 18 is a schematic diagram of a structure of a communication apparatus 1 according to an embodiment of this application. The communication apparatus 1 may be an AP or a chip in the AP, for example, a Wi-Fi chip. As shown in FIG. 18, the communication apparatus 1 includes a second unit 11, and optionally includes a processing unit 12.

The second unit 11 is configured to send a trigger frame. The trigger frame indicates a first resource unit allocated to a station, the trigger frame includes first indication information, the first indication information indicates whether the station is allowed to perform EHT TB PPDU transmission on a portion of the first resource unit allocated to the station, the first resource unit is a resource unit including more than 996 tones, or the first resource unit is a multi-resource unit MRU, and the MRU includes at least one resource unit including 996 or more tones. The second unit 11 is further configured to receive an EHT TB PPDU. It should be understood that the second unit is configured to implement a transceiver function, and the second unit may also be referred to as a transceiver unit.

Optionally, the processing unit 12 is configured to generate the trigger frame.

Optionally, that the first resource unit is a resource unit including more than 996 tones specifically includes: the first resource unit is a resource unit including N multiplied by 996 tones, where N is a positive integer greater than or equal to 2.

Optionally, the EHT TB PPDU includes second indication information, and one bit in the second indication information indicates whether the station transmits the EHT TB PPDU on one 996-tone resource unit in the allocated first resource unit.

Optionally, the second indication information is represented by a bitmap, a length of the bitmap is four bits, and one bit in the bitmap indicates whether the station transmits the EHT TB PPDU on one 996-tone resource unit.

Optionally, the EHT TB PPDU includes second indication information, the second indication information is set to a default value of a universal signal disregard and validate subfield in a special user information field in the trigger frame, to indicate the station to transmit the EHT TB PPDU on the allocated first resource unit.

Optionally, the EHT TB PPDU includes second indication information, the second indication information indicates a second resource unit occupied by the EHT TB PPDU, and the second resource unit occupied by the EHT TB PPDU is the portion of the first resource unit allocated to the station.

Optionally, the second resource unit includes one or more resource units whose sizes are greater than or equal to 996-tone resource units 996-tone RU.

Optionally, the second resource unit further includes at least one resource unit whose size is less than the 996-tone RU.

Optionally, the second indication information is an index value, and the index value identifies the second resource unit.

Optionally, the second indication information is located in a universal signal U-SIG field included in the EHT TB PPDU.

Optionally, the second indication information is determined based on the clear channel assessment result of the station before the station receives the trigger frame.

Optionally, the first indication information is located in a user information field in the trigger frame.

Optionally, the first indication information is located in the common information field or the special user information field in the trigger frame. The first indication information indicates that the station is allowed to perform EHT TB PPDU transmission on the portion of the first resource unit allocated to the station, and the first indication information further indicates that the trigger frame does not include a user information field for scheduling MU-MIMO transmission.

It should be understood that the communication apparatus 1 may correspondingly perform the foregoing method embodiments, and the foregoing operations or functions of the units in the communication apparatus 1 are separately used to implement corresponding operations of the AP in the foregoing method embodiments. For brevity, details are not described herein again.

FIG. 19 is a schematic diagram of a structure of a communication apparatus 2 according to an embodiment of this application. The communication apparatus 2 may be a station or a chip in a station, for example, a Wi-Fi chip. As shown in FIG. 19, the communication apparatus 2 includes a first unit 21, and optionally includes a processing unit 22.

The first unit 21 is configured to receive a trigger frame. The trigger frame indicates a first resource unit allocated to the station, the trigger frame includes first indication information, the first indication information indicates whether the station is allowed to perform EHT TB PPDU transmission on a portion of the first resource unit allocated to the station, the first resource unit is a resource unit including more than 996 tones, or the first resource unit is a multi-resource unit MRU, and the MRU includes at least one resource unit including 996 or more tones. The first unit 21 is further configured to send an EHT TB PPDU based on an indication of the first indication information. It should be understood that the first unit 21 is configured to implement a transceiver function, and the first unit may also be referred to as a transceiver unit.

Optionally, the processing unit 22 includes a generation subunit 221, and the generation subunit 221 is configured to generate the EHT TB PPDU.

Optionally, that the first resource unit is a resource unit including more than 996 tones specifically includes: the first resource unit is a resource unit including N multiplied by 996 tones, where N is a positive integer greater than or equal to 2.

Optionally, the EHT TB PPDU includes second indication information, and one bit in the second indication information indicates whether the station transmits the EHT TB PPDU on one 996-tone resource unit in the allocated first resource unit.

Optionally, the second indication information is represented by a bitmap, a length of the bitmap is four bits, and one bit in the bitmap indicates whether the station transmits the EHT TB PPDU on one 996-tone resource unit.

Optionally, the EHT TB PPDU includes second indication information, the second indication information is set to a default value of a universal signal disregard and validate subfield in a special user information field in the trigger frame, to indicate the station to transmit the EHT TB PPDU on the allocated first resource unit.

Optionally, the station transmits same U-SIGs in different 80 MHz bandwidths in which the second resource unit is located.

Optionally, the EHT TB PPDU includes second indication information, the second indication information indicates a second resource unit occupied by the EHT TB PPDU, and the second resource unit occupied by the EHT TB PPDU is the portion of the first resource unit allocated to the station.

Optionally, the second resource unit includes one or more resource units whose sizes are greater than or equal to 996-tone resource units 996-tone RU.

Optionally, the second resource unit further includes at least one resource unit whose size is less than the 996-tone RU.

Optionally, the second indication information is an index value, and the index value identifies the second resource unit.

Optionally, the second indication information is located in a universal signal U-SIG field included in the EHT TB PPDU.

Optionally, the second indication information is determined based on the clear channel assessment result of the station before the station receives the trigger frame.

Optionally, the processing unit 22 further includes a determining subunit 222, and the determining subunit 222 is configured to determine the second resource unit based on the clear channel assessment result of the station before the station receives the trigger frame.

Optionally, the first indication information is located in a user information field in the trigger frame.

Optionally, the first indication information is located in the common information field or the special user information field in the trigger frame. The first indication information indicates that the station is allowed to perform EHT TB PPDU transmission on the portion of the first resource unit allocated to the station, and the first indication information further indicates that the trigger frame does not include a user information field for scheduling MU-MIMO transmission.

It should be understood that the communication apparatus 2 may correspondingly perform the foregoing method embodiments, and the foregoing operations or functions of the units in the communication apparatus 2 are separately used to implement corresponding operations of the STAin the foregoing method embodiments. For brevity, details are not described herein again.

The foregoing describes the access point and the station in embodiments of this application. The following describes possible product forms of the access point and the station. It should be understood that any product in any form that has a function of the AP in FIG. 18 and any product in any form that has a function of the station in FIG. 19 fall within the protection scope of embodiments of this application. It should further be understood that the following descriptions are merely examples, and product forms of the AP and the station in embodiments of this application are not limited thereto.

In a possible product form, the AP and the STAin embodiments of this application may be implemented by using general bus architectures.

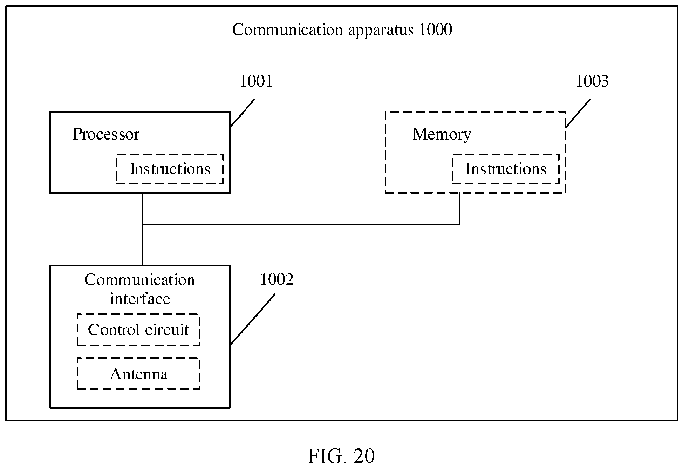

For ease of description, refer to FIG. 20. FIG. 20 is a schematic diagram of a structure of a communication apparatus 1000 according to an embodiment of this application. The communication apparatus 1000 may be an AP or a STA, or a chip in the AP or the STA. FIG. 20 shows only main components of the communication apparatus 1000. In addition to a processor 1001 and a communication interface 1002, the communication apparatus may further include a memory 1003 and an input/output apparatus (not shown in the figure).

The processor 1001 is mainly configured to process a communication protocol and communication data, control the communication apparatus, execute a software program, and process data of the software program. The memory 1003 is mainly configured to store the software program and the data. The communication interface 1002 may include a control circuit and an antenna. The control circuit is mainly configured to: perform conversion between a baseband signal and a radio frequency signal, and process the radio frequency signal. The antenna is mainly configured to transmit and receive a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1001 may read the software program in the memory 1003, interpret and execute instructions of the software program, and process data of the software program. When data needs to be sent in a wireless manner, the processor 1001 performs baseband processing on to-be-sent data, and then outputs a baseband signal to a radio frequency circuit. The radio frequency circuit performs radio frequency processing on the baseband signal, and then sends a radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

Optionally, the memory 1003 may be located in the processor 1001.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the communication interface 1002, and the memory 1003 may be connected through a communication bus.

In a design, the communication apparatus 1000 may be configured to perform a function of the AP in the foregoing method embodiments. The processor 1001 may be configured to generate the trigger frame sent in step S101 in FIG. 12, and/or configured to perform another process of the technology described in this specification. The communication interface 1002 may be configured to perform step S101 and step S104 in FIG. 12, and/or configured to perform another process of the technology described in this specification.

In another design, the communication apparatus 1000 may be configured to perform a function of the STAin the foregoing method embodiments. The processor 1001 may be configured to generate the EHT TB PPDU sent in step S103 in FIG. 12, and/or configured to perform another process of the technology described in this specification. The communication interface 1002 may be configured to perform step S102 and step S103 in FIG. 12, and/or configured to perform another process of the technology described in this specification.

In any one of the foregoing designs, the processor 1001 may include a communication interface for implementing receiving and sending functions. For example, the communication interface may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instruction may be a computer program. The computer program is run on the processor 1001, so that the communication apparatus 1000 can perform the method described in the foregoing method embodiments. The computer program may be fixed in the processor 1000. In this case, the processor 1001 may be implemented by hardware.

In an implementation, the communication apparatus 1000 may include a circuit, and the circuit may implement the sending, receiving, or communication function in the foregoing method embodiments. The processor and the communication interface described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the communication interface may be manufactured using various IC technologies, for example, a complementary metal oxide semiconductor (complementary metal oxide semiconductor, CMOS), an N-type metal oxide semiconductor (N-type Metal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and the structure of the communication apparatus may not be limited by FIG. 20. The communication apparatus may be an independent device or may be a part of a large device. For example, the communication apparatus may be:
(1) an independent integrated circuit IC, a chip, or a chip system or subsystem;
(2) a set including one or more ICs, where optionally, the set of ICs may further include a storage component configured to store data and a computer program;
(3) an ASIC, for example a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device or the like.

In a possible product form, the AP and STA in embodiments of this application may be implemented by general-purpose processors.

A general-purpose processor for implementing the AP includes a processing circuit and an input/output interface that is internally connected to and communicates with the processing circuit. The general-purpose processor may be configured to perform a function performed by the AP in the foregoing method embodiments. Specifically, the processing circuit is configured to generate the trigger frame sent in step S101 in FIG. 12, and/or configured to perform another process of the technology described in this specification. The input/output interface is configured to perform step S 101 and step S 104 in FIG. 12, and/or configured to perform another process of the technology described in this specification.

A general-purpose processor for implementing the STA includes a processing circuit and an input/output interface that is internally connected to and communicates with the processing circuit. The general-purpose processor may be configured to perform a function performed by the STA in the foregoing method embodiments. Specifically, the processing circuit is configured to generate the EHT TB PPDU sent in step S 103 in FIG. 12, and/or configured to perform another process of the technology described in this specification. The input/output interface is configured to perform step S 102 and step S 103 in FIG. 12, and/or configured to perform another process of the technology described in this specification.

It should be understood that the communication apparatuses in the foregoing various product forms have any function of the AP or STA in the method embodiments. Details are not described herein again.

An embodiment of this application further provides a computer-readable storage medium. The computer-readable storage medium stores computer program code. When the processor executes the computer program code, an electronic device performs the method in the foregoing method embodiments.

An embodiment of this application further provides a computer program product. When the computer program product runs on a computer, the computer is enabled to perform the method in the foregoing method embodiments.

An embodiment of this application further provides a communication apparatus. The apparatus may exist in a product form of a chip. A structure of the apparatus includes a processor and an interface circuit. The processor is configured to communicate with another apparatus by using the interface circuit, to enable the apparatus to perform the method in the foregoing method embodiments.

An embodiment of this application further provides a wireless communication system including an AP and a STA. The AP and the STA may perform the method in the foregoing method embodiments.

Methods or algorithm steps described in combination with the content disclosed in this application may be implemented by hardware, or may be implemented by a processor by executing a software instruction. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to the processor, to enable the processor to read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose computer or a special-purpose computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A physical layer protocol data unit PPDU transmission method, comprising:
receiving, by a station, a trigger frame, wherein the trigger frame indicates a first resource unit allocated to the station, the trigger frame comprises first indication information, the first indication information indicates whether the station is allowed to perform extremely high throughput trigger-based physical layer protocol data unit EHT TB PPDU transmission on a portion of the first resource unit, the first resource unit is a resource unit comprising more than 996 tones, or the first resource unit is a multi-resource unit MRU, and the MRU comprises at least one resource unit comprising 996 or more tones; and
sending, by the station, an EHT TB PPDU based on an indication of the first indication information.

2. A physical layer protocol data unit PPDU transmission method, comprising:
sending, by an access point, a trigger frame, wherein the trigger frame indicates a first resource unit allocated to a station, the trigger frame comprises first indication information, the first indication information indicates whether the station is allowed to perform EHT TB PPDU transmission on a portion of the first resource unit, the first resource unit is a resource unit comprising more than 996 tones, or the first resource unit is a multi-resource unit MRU, and the MRU comprises at least one resource unit comprising 996 or more tones; and
receiving, by the access point, an EHT TB PPDU.

3. The method according to claim 1 or 2, wherein that the first resource unit is a resource unit comprising more than 996 tones specifically comprises: the first resource unit is a resource unit comprising N multiplied by 996 tones, wherein N is a positive integer greater than or equal to 2.

4. The method according to claim 3, wherein the EHT TB PPDU comprises second indication information, and one bit in the second indication information indicates whether the station transmits the EHT TB PPDU on one 996-tone resource unit in the first resource unit.

5. The method according to claim 4, wherein the second indication information is represented by a bitmap, a length of the bitmap is four bits, and one bit in the bitmap indicates whether the station transmits the EHT TB PPDU on one 996-tone resource unit.

6. The method according to claim 1 or 2, wherein the EHT TB PPDU comprises second indication information, and the second indication information is set to a default value of a special user information field in the trigger frame, to indicate the station to transmit the EHT TB PPDU on the first resource unit.

7. The method according to claim 1 or 2, wherein the EHT TB PPDU comprises second indication information, the second indication information indicates a second resource unit occupied by the EHT TB PPDU, and the second resource unit occupied by the EHT TB PPDU is the portion of the first resource unit.

8. The method according to claim 7, wherein the station transmits same U-SIGs in different 80 MHz bandwidths in which the second resource unit is located.

9. The method according to claim 7, wherein the second resource unit comprises at least one resource unit whose size is greater than or equal to a 996-tone resource unit 996-tone RU.

10. The method according to claim 9, wherein the second resource unit further comprises at least one resource unit whose size is less than the 996-tone RU.

11. The method according to any one of claims 7 to 10, wherein the second indication information is an index value, and the index value identifies the second resource unit.

12. The method according to any one of claims 4 to 11, wherein the second indication information is located in a universal signal U-SIG field comprised in the EHT TB PPDU.

13. The method according to any one of claims 4 to 12, wherein the second indication information is determined based on a clear channel assessment result of the station before the station receives the trigger frame.

14. The method according to any one of claims 1 to 13, wherein the first indication information is located in a user information field in the trigger frame.

15. The method according to any one of claims 1 to 13, wherein the first indication information is located in a common information field or the special user information field in the trigger frame; and
the first indication information indicates that the station is allowed to perform EHT TB PPDU transmission on the portion of the first resource unit allocated to the station, and the first indication information further indicates that the trigger frame does not comprise a user information field for scheduling MU-MIMO transmission.

16. A communication apparatus, comprising a processor and a communication interface, wherein the communication apparatus is configured to:
receive a trigger frame, wherein the trigger frame indicates a first resource unit allocated to the station, the trigger frame comprises first indication information, the first indication information indicates whether the station is allowed to perform EHT TB PPDU transmission on a portion of the first resource unit, the first resource unit is a resource unit comprising more than 996 tones, or the first resource unit is a multi-resource unit MRU, and the MRU comprises at least one resource unit comprising 996 or more tones; and
send an EHT TB PPDU based on an indication of the first indication information.

17. A communication apparatus, comprising a processor and a communication interface, wherein the communication apparatus is configured to:
send a trigger frame, wherein the trigger frame indicates a first resource unit allocated to a station, the trigger frame comprises first indication information, the first indication information indicates whether the station is allowed to perform EHT TB PPDU transmission on a portion of the first resource unit allocated to the station, the first resource unit is a resource unit comprising more than 996 tones, or the first resource unit is a multi-resource unit MRU, and the MRU comprises at least one resource unit comprising 996 or more tones; and
receive an EHT TB PPDU.

18. A computer program product comprising program instructions, wherein when the program instructions are run on a computer, the computer is enabled to perform the method according to any one of claims 1 to 15.

19. A computer-readable storage medium, wherein the computer-readable storage medium stores program instructions, and when the program instructions are run, the method according to any one of claims 1 to 15 is performed.

20. A communication apparatus, wherein the communication apparatus is specifically a station or a chip in a station, and comprises:
a first unit, configured to receive a trigger frame, wherein the trigger frame indicates a first resource unit allocated to the station, the trigger frame comprises first indication information, the first indication information indicates whether the station is allowed to perform EHT TB PPDU transmission on a portion of the first resource unit allocated to the station, the first resource unit is a resource unit comprising more than 996 tones, or the first resource unit is a multi-resource unit MRU, and the MRU comprises at least one resource unit comprising 996 or more tones, wherein
the first unit is further configured to send an EHT TB PPDU based on an indication of the first indication information.

21. A communication apparatus, wherein the communication apparatus is specifically an access point or a chip in an access point, and comprises:
a second unit, configured to send a trigger frame, wherein the trigger frame indicates a first resource unit allocated to a station, the trigger frame comprises first indication information, the first indication information indicates whether the station is allowed to perform EHT TB PPDU transmission on a portion of the first resource unit allocated to the station, the first resource unit is a resource unit comprising more than 996 tones, or the first resource unit is a multi-resource unit MRU, and the MRU comprises at least one resource unit comprising 996 or more tones, wherein
the second unit is further configured to receive an EHT TB PPDU.

22. The communication apparatus according to claim 20 or 21, wherein that the first resource unit is a resource unit comprising more than 996 tones specifically comprises: the first resource unit is a resource unit comprising N multiplied by 996 tones, wherein N is a positive integer greater than or equal to 2.

23. The communication apparatus according to claim 22, wherein the EHT TB PPDU comprises second indication information, and one bit in the second indication information indicates whether the station transmits the EHT TB PPDU on one 996-tone resource unit in the first resource unit.

24. The communication apparatus according to claim 23, wherein the second indication information is represented by a bitmap, a length of the bitmap is four bits, and one bit in the bitmap indicates whether the station transmits the EHT TB PPDU on one 996-tone resource unit.

25. The communication apparatus according to claim 20 or 21, wherein the EHT TB PPDU comprises second indication information, and the second indication information is set to a default value of a special user information field in the trigger frame, to indicate the station to transmit the EHT TB PPDU on the first resource unit.

26. The communication apparatus according to claim 20 or 21, wherein the EHT TB PPDU comprises second indication information, the second indication information indicates a second resource unit occupied by the EHT TB PPDU, and the second resource unit occupied by the EHT TB PPDU is the portion of the first resource unit.

27. The communication apparatus according to claim 26, wherein the station transmits same U-SIGs in different 80 MHz bandwidths in which the second resource unit is located.

28. The communication apparatus according to claim 26, wherein the second resource unit comprises at least one resource unit whose size is greater than or equal to a 996-tone resource unit 996-tone RU.

29. The communication apparatus according to claim 28, wherein the second resource unit further comprises at least one resource unit whose size is less than the 996-tone RU.

30. The communication apparatus according to any one of claims 26 to 29, wherein the second indication information is an index value, and the index value identifies the second resource unit.

31. The communication apparatus according to any one of claims 23 to 30, wherein the second indication information is located in a universal signal U-SIG field comprised in the EHT TB PPDU.

32. The communication apparatus according to any one of claims 23 to 31, wherein the second indication information is determined based on a clear channel assessment result of the station before the station receives the trigger frame.

33. The communication apparatus according to any one of claims 20 to 32, wherein the first indication information is located in a user information field in the trigger frame.

34. The communication apparatus according to any one of claims 20 to 32, wherein the first indication information is located in a common information field or the special user information field in the trigger frame; and
the first indication information indicates that the station is allowed to perform EHT TB PPDU transmission on the portion of the first resource unit allocated to the station, and the first indication information further indicates that the trigger frame does not comprise a user information field for scheduling MU-MIMO transmission.
